# EUROPÄISCHE PATENTSCHRIFT

(11) **EP 3 600 992 B1**
(45) Veröffentlichungstag und Bekanntmachung des Hinweises auf die Patenterteilung: **01.11.2023**
(21) Anmeldenummer: 18714990.1
(22) Anmeldetag: 19.03.2018
(51) Int. Cl.: B60T 13/66, B60T 13/68, B60T 17/22

(54) **ELEKTRONISCH STEUERBARES BREMSSYSTEM SOWIE VERFAHREN ZUM STEUERN DES ELEKTRONISCH STEUERBAREN BREMSSYSTEMS**
ELECTRONICALLY CONTROLLABLE BRAKING SYSTEM AND METHOD FOR CONTROLLING THE ELECTRONICALLY CONTROLLABLE BRAKING SYSTEM
SYSTÈME DE FREINAGE COMMANDABLE ÉLECTRONIQUEMENT ET PROCÉDÉ POUR COMMANDER LE SYSTÈME DE FREINAGE COMMANDABLE ÉLECTRONIQUEMENT

(30) Priorität: 21.03.2017 DE 102017002716
(43) Veröffentlichungstag der Anmeldung: 05.02.2020
(73) Patentinhaber: ZF CV Systems Europe BV, 1170 Brussels (BE)
(72) Erfinder: VAN THIEL, Julian, 30938 Grossburgwedel (DE)
(74) Vertreter: Rabe, Dirk-Heinrich
(86) Internationale Anmeldenummer: PCT/EP2018/056841
(87) Internationale Veröffentlichungsnummer: WO 2018/172256

(56) Entgegenhaltungen:
- EP-A1- 1 122 142
- EP-A2- 0 387 004
- EP-A2- 1 099 873
- EP-A2- 2 371 641
- WO-A1-2017/001546
- WO-A2-2004/098967
- WO-A2-2009/152982
- DE-A1-102014 107 278
- DE-A1-102014 112 015
- DE-A1-102015 011 296
- DE-B3-102008 009 043

## Beschreibung

Die Erfindung betrifft ein elektronisch steuerbares Bremssystem sowie ein Verfahren zum Steuern des elektronisch steuerbaren Bremssystems.

Ein Bremssystem in einem Fahrzeug, vorzugsweise Nutzfahrzeug, kann mit zwei oder mehreren Betriebsbremskreisen, in denen ein an Betriebsbremsen ausgesteuerter Betriebsbrems-Bremsdruck eingestellt wird, sowie ein Parkbremskreis, in dem ein an Federspeicherbremsen ausgesteuerter Parkbrems-Bremsdruck eingestellt wird, vorgesehen sein. Die Aussteuerung des Betriebsbrems-Bremsdruckes an die Betriebsbremsen erfolgt beispielsweise über einen Druckmodulator, der gemäß einer Betriebsbrems-Bremsvorgabe in Form eines pneumatischen Betriebsbrems-Steuerdruckes oder eines elektrischen Betriebsbrems-Steuersignals einen Betriebsbrems-Bremsdruck an die jeweiligen Betriebsbremsen ausgibt.

Im normalen Betrieb erfolgt die Vorgabe an den Druckmodulator elektrisch über das Betriebsbrems-Steuersignal, wobei das Betriebsbrems-Steuersignal von einem Betriebsbrems-Steuermodul in Abhängigkeit einer manuell vorgegebenen Betriebsbrems-Bremsvorgabe und/oder in Abhängigkeit einer von einem Assistenzsystem automatisiert angeforderten Assistenz-Bremsvorgabe ermittelt und ausgegeben wird. Im Redundanzfall, z. B. bei einem elektrischen Ausfall des Betriebsbrems-Steuermoduls, erfolgt die Vorgabe an den Druckmodulator über den Betriebsbrems-Steuerdruck, der dem Druckmodulator über einen pneumatischen Redundanzanschluss vorgegeben wird und der beispielsweise von einer als elektropneumatisches Betriebsbremsventil ausgeführten Betriebsbrems-Betätigungsvorrichtung mit einem Bremspedal in Abhängigkeit der Betriebsbrems-Bremsvorgabe ausgegeben wird.

Der Parkbremskreis dient vorrangig dazu, das Fahrzeug in einer Parksituation abzustellen oder eine Hilfsbremsung oder Notbremsung während der Fahrt durchzuführen, indem gesteuert von einem Parkbrems-Steuermodul ein Parkbrems-Bremsdruck ausgesteuert wird, in Abhängigkeit dessen die Federspeicherbremsen zugespannt werden, wobei zum Zuspannen der Parkbrems-Bremsdruck reduziert wird. Beispielhaft ist ein derartiges Parkbrems-Steuermodul bzw. Feststellbremsmodul in DE 10 2015 008 377 A1 beschrieben. Herkömmlicherweise arbeiten der Parkbremskreis und die Betriebsbremskreise getrennt voneinander.

Bei einem Ausfall der elektrischen Ansteuerung der Betriebsbremskreise über das Betriebsbrems-Steuermodul kann wie beschrieben eine pneumatische durch den Fahrer gesteuerte Rückfallebene ausgebildet werden. Steht der Fahrer allerdings nicht als Rückfallebene zur Verfügung, da er z.B. unaufmerksam oder im Falle von höher automatisierten Fahrmanövern nicht am Platz ist, kann in herkömmlichen Fahrzeugen eine weitere Rückfallebene ausgebildet werden, die automatisiert und elektronisch gesteuert eingreifen kann, wobei dazu der vorhandene Parkbremskreis verwendet wird. Die automatisierte Bremsanforderung wird nach Erkennen des elektrischen Ausfalls in einem der Betriebsbremskreise dem Parkbrems-Steuermodul zugeführt, das durch eine Vorgabe des Parkbrems-Bremsdruckes entsprechend die Federspeicherbremsen betätigen kann, um den elektrischen Ausfall der Betriebsbremsen zu kompensieren. Alternativ kann die automatisierte Bremsanforderung dem Parkbrems-Steuermodul permanent zugeführt werden und bei Erkennen eines Ausfalls in mindestens einem der Betriebsbremskreise durch das Parkbrems-Steuermodul, dieses durch eine Vorgabe des Parkbrems-Bremsdruckes entsprechend die Federspeicherbremsen betätigen. In dem Fall ist jedoch unter Umständen lediglich eine Fahrzeugachse, an der die Federspeicherbremsen im Parkbremskreis angeordnet sind, abgebremst. Dies kann zu einer eingeschränkten Verzögerungsleistung und ggf. zusätzlichen Instabilitäten während der Fahrt führen.

Um dies zu vermeiden, ist in EP 2 090 481 B1 ein elektronisch steuerbares Bremssystem beschrieben, in dem ein Hinterachs-Betriebsbremskreis von einem Hinterachs-Betriebsbrems-Steuermodul gesteuert wird und ein Vorderachs-Betriebsbremskreis von einem Vorderachs-Betriebsbrems-Steuermodul. Im Vorderachs-Betriebsbrems-Steuermodul ist das Parkbrems-Steuermodul für den Parkbremskreis integriert, wobei der Parkbremskreis Federspeicherbremsen an der Hinterachse steuert. Das Hinterachs-Betriebsbrems-Steuermodul, die Komponenten des Hinterachs-Betriebsbremskreises sowie ein Anhänger-Steuerventil des Bremssystems werden von einer ersten Energiequelle und das Vorderachs-Betriebsbrems-Steuermodul sowie das Parkbrems-Steuermodul mit den entsprechend zugeordneten Komponenten werden von einer zweiten Energiequelle mit Energie versorgt.

Bei einem Ausfall der ersten Energiequelle, d.h. dem Hinterachs-Betriebsbremskreis mit den Betriebsbremsen an der Hinterachse, kann die Vorderachse weiter über den Vorderachs-Betriebsbremskreis und die Hinterachse über den Parkbremskreis gebremst werden, so dass weiterhin beide Fahrzeugachsen abgebremst werden können. Der Parkbremskreis kompensiert somit den Ausfall des Hinterachs-Betriebsbremskreises, indem an der Hinterachse statt mit den Betriebsbremsen mit den Federspeicherbremsen gebremst wird. Um in dem Fall im Anhänger eine Bremsung bewirken zu können, kann das Anhänger-Steuerventil lediglich pneumatisch mit dem Betriebsbrems-Bremsdruck der Vorderachse angesteuert werden, da keine Energie für eine elektrische Ansteuerung von Magnetsteuerventilen im Anhänger-Steuerventil bereitsteht.

Bei einem Ausfall der zweiten Energiequelle, d.h. sowohl des Parkbremskreises an der Hinterachse als auch des Vorderachs-Betriebsbremskreises, wird von dem Hinterachs-Betriebsbrems-Steuermodul ein Betriebsbrems-Steuersignal ausgegeben, das - wie im normalen Betrieb - an den Hinterachs-Druckmodulator aber zusätzlich auch an das Anhänger-Steuerventil des Fahrzeuges übertragen wird. Von dem Anhänger-Steuerventil wird über ein Vorsteuermodul aus Magnetsteuerventilen ein entsprechender Steuerdruck erzeugt, der - falls vorhanden - auf den Anhänger übertragen wird, um dort eine Bremsung zu bewirken, und gleichzeitig auch über eine Redundanz-Druckleitung zum pneumatischen Redundanzanschluss am Vorderachs-Druckmodulator. Die Hinterachse und die Vorderachse werden somit - wie im normalen Betrieb - über die Betriebsbremsen abgebremst, wobei die Vorderachse ebenfalls durch das Hinterachs-Betriebsbrems-Steuermodul gesteuert wird.

Das Parkbrems-Steuermodul kann weiterhin einen Parkbrems-Steuerdruck an das Anhängersteuerventil ausgeben, das diesen invertiert und an die Betriebsbremsen des Anhängers weiterleitet, um auch im Anhänger eine Parkbremsfunktion umsetzen zu können.

Somit ist im Stand der Technik vorgeschlagen, jeden Betriebsbremskreis über separate Steuermodule anzusteuern und einen Ausfall einer Energiequelle und somit zumindest eines Betriebsbremskreises dadurch zu kompensieren, dass der oder die jeweils noch funktionierenden Bremskreise eine Bremsung an der ausgefallenen Fahrzeugachse übernehmen, so dass auch im Redundanzfall noch beide Fahrzeugachsen für eine Bremsung herangezogen werden können. Eine redundante Bremsung des Anhängers erfolgt in dem Fall über eine manuelle Vorgabe in dem jeweils noch funktionierenden Bremskreis.

Nachteilig hierbei ist, dass in elektronisch gesteuerten Bremssystemen, die über lediglich ein zentrales Betriebsbrems-Steuermodul die Betriebsbremsen an der Hinterachse und der Vorderachse und ggf. weiteren Fahrzeugachsen über den Druckmodulator ansteuern, keine derartige Kompensation stattfinden kann, da bei einem Ausfall der Energiequelle oder einzelner elektrischer Komponenten des jeweiligen Betriebsbremskreises das zentrale Betriebsbrems-Steuermodul nicht mehr die elektrische Ansteuerung der Betriebsbremsen bzw. der vorgeschalteten Druckmodulatoren an einzelnen Fahrzeugachsen übernehmen kann. Somit kann - falls in dem entsprechenden Bremssystem vorhanden - lediglich auf die pneumatische, vom Fahrer gesteuerte erste Rückfallebene ausgewichen werden, falls der Fahrer auch tatsächlich manuell eingreift. Eine rein elektronische Bremsvorgabe wie sie in EP 2 090 481 B1 beschrieben ist bzw. eine mögliche automatisiert vorgegeben Assistenz-Bremsvorgabe kann jedoch nicht mehr umgesetzt werden, weder im Zugfahrzeug noch im Anhänger.

Nachteilig ist weiterhin, dass ein redundantes Umsetzen einer rein elektrischen vorliegenden Bremsvorgabe direkt über das Anhänger-Steuerventil bei einem Ausfall der ersten Energiequelle nicht möglich ist, da bei einem derartigen elektrischen Ausfall das Anhänger-Steuerventil nicht mit Energie versorgt ist und somit lediglich eine pneumatische Ansteuerung des Anhänger-Steuerventils über den Vorderachsbremskreis möglich ist. Eine rein elektrische Ansteuerung auf direktem Wege über das Anhänger-Steuerventil ist bei einem elektrischen Ausfall somit nicht in jedem Fall möglich.

DE 10 2014 112 015 A1 zeigt ein Verfahren zum Steuern einer durch eine elektropneumatische Betriebsbremsventileinrichtung betätigten elektropneumatischen Betriebsbremseinrichtung.

DE 10 2008 009 043 B3 zeigt ein elektronisch geregeltes Bremssystem eines für den Anhängerbetrieb vorgesehenen Zugfahrzeugs, welches mindestens einen ersten elektrischen Bremssteuerkreis und einen zweiten elektrischen Bremssteuerkreis umfasst. Es sieht vor, dass in einem Zugfahrzeug ohnehin vorhandene Komponenten wie beispielsweise ein Anhängersteuermodul oder ein Parkbremsmodul für eine Druckmittelsteuerung von Bremsaktuatoren eingesetzt werden, welche von einem gestörten elektrischen Bremskreis nicht mehr angesteuert werden können.

EP 0 387 004 A2 zeigt ein Anhängerbremssystem für ein Zugfahrzeug mit einem Anhängerbremsventil, dem eine Druckluftzufuhr zugeführt wird, die durch das Öffnen des Ventils moduliert wird, gesteuert durch einen ersten Steuerdruck, der von einer Anhängerbremssteuerung in Übereinstimmung mit Bremsanforderungssignalen geregelt wird, um einen Anhängerbremsdruck zu erzeugen.

DE 10 2014 107 278 A1 zeigt eine elektropneumatische Bremssteuereinrichtung zur Steuerung einer Feststellbremse eines Fahrzeugs mit Betriebsbremse und Feststellbremse, mit einer von einem elektronischen Steuereinrichtung gesteuerten, und über einen Vorratsanschluss mit Druckluft aus einem Druckluftvorrat versorgbaren elektromagnetischen Ventileinrichtung, einem Feststellbremssignalanschluss zum Einsteuern von durch einen elektrischen Feststellbremssignalgeber ausgesteuerten Feststellbremssignalen, einer von der elektromagnetischen Ventileinrichtung pneumatisch gesteuerten luftmengenverstärkenden Ventileinrichtung mit einem Arbeitsausgang, welcher mit einem ersten Ausgangsanschluss für wenigstens einen Federspeicherbremszylinder verbindbar ist, welcher zum Zuspannen des wenigstens einen Federspeicherbremszylinders entlüftet und zum Lösen belüftet wird, wobei zwischen einem Auslass der elektromagnetischen Ventileinrichtung und einem pneumatischen Steuereingang der luftmengenverstärkenden Ventileinrichtung eine Steuerluftleitung vorgesehen ist.

DE 10 2015 011 296 A1 zeigt ein elektronisch gesteuertes pneumatisches Bremssystem, mit mindestens einen Bremskreis, wobei dem mindestens einen Bremskreis mindestens ein Steuerventil zum Einstellen von Bremsdrücken zugeordnet ist, wobei das mindestens eine Steuerventil elektronisch in Abhängigkeit eines Steuersignals und pneumatisch in Abhängigkeit eines Steuerdrucks gesteuert werden kann. Erfindungsgemäß ist zusätzlich zu einem ersten Bremsventil ein zweites Bremsventil vorgesehen, das elektronisch gesteuert einen pneumatischen zweiten Bremsventil-Steuerdruck ausgeben kann.

Es ist daher Aufgabe der Erfindung, ein elektronisch steuerbares Bremssystem sowie ein Verfahren zum Steuern dieses elektronisch steuerbaren Bremssystems anzugeben, das in einfacher und zuverlässiger Weise eine elektrisch redundante Ansteuerung von Betriebsbremsen eines Fahrzeuges und/oder eines Anhängers ermöglicht.

Diese Aufgabe wird durch ein elektronisch steuerbares Bremssystem nach Anspruch 1 und Anspruch 2 sowie ein Verfahren nach Anspruch 20 gelöst. Die Unteransprüche geben bevorzugte Weiterbildungen an.

Erfindungsgemäß ist demnach vorgesehen, in einem elektronisch steuerbaren Bremssystem in einem Fahrzeug, insbesondere Nutzfahrzeug, mit mindestens einem Betriebsbremskreis, in dem ein Betriebsbrems-Bremsdruck an Betriebsbremsen ausgesteuert wird, den Betriebsbrems-Bremsdruck in Abhängigkeit eines in einem Anhänger-Steuerventil erzeugten Redundanz-Steuerdruckes festzulegen, falls ein durch ein Betriebsbrems-Steuermodul elektrisch gesteuertes Umsetzen einer bestimmten angeforderten Bremsvorgabe über den mindestens einen Betriebsbremskreis verhindert ist, wobei der Betriebsbrems-Bremsdruck bei einem elektrisch gesteuerten Umsetzen der Bremsvorgabe im Normalfall in Abhängigkeit eines von dem Betriebsbrems-Steuermodul erzeugten Betriebsbrems-Steuersignals erzeugt und an die Betriebsbremsen des betreffenden Betriebsbremskreises ausgegeben werden kann.

Das elektrisch gesteuerte Umsetzen der Bremsvorgabe ist beispielsweise bei einem elektrischen Ausfall in mindestens einem der Betriebsbremskreise nicht möglich. Ein elektrischer Ausfall schließt dabei im Rahmen der Erfindung insbesondere den Fall ein, dass ein Erzeugen des Betriebsbrems-Steuersignals im Betriebsbrems-Steuermodul fehlschlägt, z.B. weil das Betriebsbrems-Steuermodul einen elektrischen Defekt aufweist, und deshalb eine Vorgabe des Betriebsbrems-Bremsdruckes in Abhängigkeit des - in dem Fall nicht vorhandenen - Betriebsbrems-Steuersignals nicht möglich ist. Weiterhin kann ein elektrischer Ausfall vorliegen, wenn zwar ein Betriebsbrems-Steuersignal vom Betriebsbrems-Steuermodul erzeugt und ausgegeben werden kann, dieses aber beispielsweise aufgrund eines elektrischen Defekts in einer beliebigen elektrischen Komponente des betreffenden Betriebsbremskreises nicht in einen Betriebsbrems-Bremsdruck umgesetzt werden kann.

Erfindungsgemäß weist das Anhänger-Steuerventil hierbei ein Anhänger-Steuermodul auf, das ausgebildet ist, eine an das Anhänger-Steuerventil oder an das Anhänger-Steuermodul elektronisch übermittelte Bremsvorgabe aufzunehmen und zu verarbeiten, insbesondere dann, wenn ein elektrisch gesteuertes Umsetzen der Bremsvorgabe über das Betriebsbrems-Steuermodul in dem mindestens einen Betriebsbremskreis nicht möglich ist. Gesteuert von dem Anhänger-Steuermodul wird dann bei einem elektrischen Ausfall in dem mindestens einen Betriebsbremskreis, vorzugsweise über ein im Anhänger-Steuerventil angeordnetes Vorsteuermodul mit elektrisch steuerbaren Druckventilen, vorzugsweise Magnetsteuerventilen, der Redundanz-Steuerdruck aus einem Druckmittelvorrat erzeugt, der anschließend zur redundanten Ansteuerung des mindestens einen Betriebsbremskreises ausgegeben werden kann.

Vorteilhafterweise ist die Intelligenz zur Steuerung des Anhänger-Steuerventils und zum insbesondere redundanten Erzeugen des Redundanz-Steuerdruckes also im oder am Anhänger-Steuerventil selbst angeordnet bzw. darin integriert, so dass eine Verarbeitung von Bremsvorgaben direkt im Anhänger-Steuerventil stattfinden kann und daher eine kompakte und nachrüstbare Baueinheit bereitgestellt werden kann.

Erfindungsgemäß kann der im Anhänger-Steuerventil erzeugte Redundanz-Steuerdruck auch als Anhänger-Steuerdruck an einen Anhänger ausgegeben werden, um auch in diesem - gesteuert von dem Anhänger-Steuermodul - eine redundante Bremsung bewirken zu können, wenn z.B. von dem Betriebsbrems-Steuermodul im Betriebsbremskreis keine Bremsvorgabe an das Anhänger-Steuerventil vorgegeben werden kann, um in Abhängigkeit davon einen Anhänger-Steuerdruck zu erzeugen und an den Anhänger auszugeben, weil z.B. ein elektrischer Ausfall im Sinne der Erfindung vorliegt. Das Anhänger-Steuerventil im Fahrzeug ist demnach ebenfalls mit einem Anhänger bzw. einem darin angeordneten Betriebsbrems-Bremssystem druckleitend verbindbar, um den Anhänger-Steuerdruck an diesen zu übertragen.

Das erfindungsgemäße Anhänger-Steuerventil ist also vorteilhafterweise ausgebildet, die Aufgabe eines herkömmlichen Anhänger-Steuerventils in einem Fahrzeug zu übernehmen, mit dem im Normalbetrieb der Anhänger-Steuerdruck - gemäß einer Bremsvorgabe vom Betriebsbrems-Steuermodul - über den "gelben Kupplungskopf" auf den Anhänger übertragen werden kann, wobei die Logik bzw. Intelligenz für eine derartige Ansteuerung in Form des Anhänger-Steuermoduls im Anhänger-Steuerventil selbst angeordnet ist. Das erfindungsgemäße Anhänger-Steuerventil erweitert ein herkömmliches Anhänger-Steuerventil weiterhin um die Möglichkeit, bei einem elektrischen Ausfall in mindestens einem Betriebsbremskreis bzw. in dem Betriebsbrems-Steuermodul eine elektrisch auf einem anderen Weg an das Anhänger-Steuerventil übertragene Bremsvorgabe dennoch in den Betriebsbremskreisen und/oder auch im Anhänger umzusetzen. Das im Anhänger-Steuerventil integrierte Anhänger-Steuermodul ist also ausgebildet, sowohl im Normalbetrieb als auch im Redundanzfall die Steuerung der jeweiligen Betriebsbremsen im Anhänger und/oder im Fahrzeug zu übernehmen.

Somit kann bereits der Vorteil erreicht werden, dass durch eine geeignete Intelligenz im Anhänger-Steuerventil in Form des Anhänger-Steuermoduls, das in einem herkömmlichen Anhänger-Steuerventil in einfacher Weise nachzurüsten ist, eine elektrisch vorgegebene Bremsvorgabe verarbeitet und redundant neben dem Anhänger auch über die Betriebsbremskreise des Fahrzeuges umgesetzt werden kann, wenn eigentlich ein elektrischer Ausfall in diesen Betriebsbremskreisen vorliegt und die jeweilige Bremsvorgabe somit gesteuert vom Betriebsbrems-Steuermodul nicht umgesetzt werden kann.

Somit können vorteilhafterweise ohnehin vorhandene Komponenten im Fahrzeug durch eine modulare Erweiterung mehrfach verwendet werden, d. h. für eine herkömmliche Anhänger-Bremssteuerung im Normalbetrieb und eine redundante Ansteuerung sowohl der Betriebsbremsen im Fahrzeug als auch im Anhänger. Dadurch können Kosten gespart werden und auch der Platzaufwand sowie der Steuerungs- und Regelungsaufwand im Bremssystem können minimiert werden, da nur wenige zusätzliche Komponenten im Fahrzeug zu verbauen und anzusteuern sind. Hierbei ist insbesondere dafür zu sorgen, dass der Redundanz-Steuerdruck bei einem elektrischen Ausfall über eine zusätzliche Redundanz-Druckleitung in den entsprechenden Betriebsbremskreis eingesteuert werden kann.

Vorzugsweise kann das Anhänger-Steuerventil also im Normalbetrieb, d.h. ohne einen elektrischen Ausfall in dem mindestens einen Betriebsbremskreis, weiterhin für eine Ansteuerung der Betriebsbremsen im Anhänger verwendet werden, beispielsweise in Abhängigkeit einer Parkbrems-Bremsvorgabe in einem Parkbremskreis des Bremssystems oder in Abhängigkeit einer Betriebsbrems-Bremsvorgabe aus dem dann noch funktionierenden Betriebsbremskreis oder einer automatisiert vorgegebenen Assistenz-Bremsvorgabe, wie es in herkömmlichen Bremssystemen der Fall ist.

Hierbei kann vorgesehen sein, den Redundanz-Steuerdruck lediglich einem Betriebsbremskreis des Fahrzeuges, insbesondere einem Vorderachs-Betriebsbremskreis, oder auch an weitere Betriebsbremskreise im Fahrzeug vorzugeben, falls ein elektrischer Ausfall vorliegt und der Ausfall durch eine Bremsung an weiteren Fahrzeugachsen mit Betriebsbremsen kompensiert werden soll. Die im Folgenden beschriebenen Ausführungsvarianten sind dementsprechend an lediglich einer oder ggf. auch an weiteren Fahrzeugachsen bzw. in weiteren Betriebsbremskreisen in identischer Weise vorzusehen.

Um in den jeweiligen Bremskreisen eine Aussteuerung der jeweiligen Drücke bewirken zu können, ist vorgesehen, dass der mindestens eine Betriebsbremskreis von einer ersten Energiequelle und das Anhänger-Steuerventil und ggf. auch das Parkbremsventil von einer zweiten Energiequelle mit Energie versorgt werden, wobei die erste Energiequelle unabhängig von der zweiten Energiequelle ist. Dadurch soll gewährleistet werden, dass bei einem Ausfall der ersten Energiequelle, die für die Betriebsbremskreise zuständig ist, in dem Anhänger-Steuerventil weiterhin ein Redundanz-Steuerdruck erzeugt und ausgegeben werden kann, um diesen an den oder die ausgefallenen Betriebsbremskreise sowie den Anhänger vorgeben zu können.

Das Anhänger-Steuerventil kann in einer optionalen Ausführung weiterhin ausgebildet sein, den Redundanz-Steuerdruck in Abhängigkeit einer in einem Parkbremskreis des Bremssystems umsetzbaren Bremsvorgabe zu erzeugen, wobei der Redundanz-Steuerdruck dazu derartig festgelegt wird, dass dieser umgekehrt proportional zu einem Parkbrems-Bremsdruck und/oder Parkbrems-Steuerdruck und/oder einem damit zusammenhängenden Steuerdruck ist, die in Abhängigkeit der Bremsvorgabe im Parkbremskreis erzeugt und in Abhängigkeit dessen im Parkbremskreis angeordnete Federspeicherbremsen angesteuert werden können, um die Bremsvorgabe über den Parkbremskreis umzusetzen. Das Erzeugen erfolgt hierbei durch eine Invertierung im Anhänger-Steuerventil.

Dadurch kann bereits der Vorteil erreicht werden, dass eine dem Parkbremskreis vorgegebene Bremsvorgabe über das Anhänger-Steuerventil im Normalbetrieb, d.h. ohne einen elektrischen Ausfall, im Rahmen einer Parkbremsfunktion auch an den Anhänger ausgesteuert werden kann. Unter Umständen kann dies aber auch im redundanten Fahrbetrieb, d.h. bei einem elektrischen Ausfall in dem mindestens einen Betriebsbremskreis, genutzt werden, um die Bremsvorgabe im Parkbremskreis auch an den mindestens einen Betriebsbremskreis sowie auch den Anhänger umzuleiten, um auch in diesen eine redundante Bremsung in Abhängigkeit der Bremsvorgabe im Parkbremskreis bewirken zu können, und darüber einen elektrischen Ausfall zu kompensieren. Dadurch kann - falls gewünscht - eine weitere Redundanz ausgebildet werden.

Die im Anhänger-Steuerventil bewirkte Invertierung erfolgt dann vorzugsweise über ein inverses Relaisventil, das im Anhänger-Steuerventil angeordnet ist und beispielsweise in einem herkömmlichen Anhänger-Steuerventil ebenfalls bereits vorhanden ist. Unter einer Invertierung wird hierbei im Rahmen der Erfindung verstanden, dass das Anhänger-Steuerventil bzw. das inverse Relaisventil dafür sorgen, dass ein zum Parkbrems-Bremsdruck und/oder Parkbrems-Steuerdruck umgekehrt proportionaler Redundanz-Steuerdruck erzeugt und ausgegeben wird. Dadurch kann vorteilhafterweise erreicht werden, dass ein im Parkbremskreis zur Ansteuerung der Federspeicherbremsen erzeugbarer Parkbrems-Bremsdruck und/oder Parkbrems-Steuerdruck, die jeweils die dem Parkbremskreis vorgegebene Bremsvorgabe charakterisieren, nach der Invertierung unmittelbar dazu verwendet werden können, die Betriebsbremsen im Fahrzeug und/oder im Anhänger anzusteuern und darüber die Bremsvorgabe im mindestens einen Betriebsbremskreis und/oder im Anhänger umzusetzen. D.h. über die Betriebsbremsen im Betriebsbremskreis und/oder im Anhänger wird in Abhängigkeit des invertierten Parkbrems-Bremsdruckes und/oder des invertierten Parkbrems-Steuerdruckes in etwa dieselbe Bremswirkung erzielt wie über die Federspeicherbremsen im Parkbremskreis in Abhängigkeit des Parkbrems-Bremsdruckes und/oder des Parkbrems-Steuerdruckes. Somit kann bei einem elektrischen Ausfall in den Betriebsbremskreisen auf eine aufwändige Druckregelung zum Erzeugen des Betriebsbrems-Bremsdruckes verzichtet werden.

Der Parkbremskreis im Bremssystem kann gemäß einer ersten Alternative ein Parkbrems-Steuermodul aufweisen, das den Parkbrems-Bremsdruck in Abhängigkeit der Bremsvorgabe erzeugt, wobei die Bremsvorgabe in dieser Alternative elektrisch an das Parkbrems-Steuermodul übertragen wird. Das Parkbrems-Steuermodul ist mit den Federspeicherbremsen des Parkbremskreises verbunden, um den Parkbrems-Bremsdruck pneumatisch an die Federspeicherbremsen zu übertragen. D.h. es liegt eine elektrisch gesteuerte Parkbremse vor.

Die Bremsvorgabe an das Anhänger-Steuerventil und/oder den Parkbremskreis kann im Rahmen der Erfindung eine automatisiert angeforderte Assistenz-Bremsvorgabe sein, die automatisiert von einem Assistenz-Steuermodul erzeugt wird. Das Assistenz-Steuermodul ist dazu vorgesehen, das Fahrzeug automatisiert anhand von Umfeld-Informationen zu steuern, wobei das Fahrzeug anhand der Assistenz-Bremsvorgabe automatisiert abgebremst werden kann und die Assistenz-Bremsvorgabe dazu sowohl über den mindestens einen Betriebsbremskreis und/oder über den Parkbremskreis umsetzbar ist. Weiterhin kann die Bremsvorgabe eine manuell vom Fahrer über eine Parkbrems-Betätigungsvorrichtung angeforderte Parkbrems-Bremsvorgabe und/oder eine manuell über eine Betriebsbrems-Betätigungsvorrichtung, z.B. ein elektropneumatisches Betriebsbremsventil oder eine rein elektrisch gesteuerte Betriebsbrems-Betätigungsvorrichtung, angeforderte Betriebsbrems-Bremsvorgabe sein, die auf den beschriebenen Wegen über das Anhänger-Steuerventil auch redundant an die Betriebsbremsen im jeweiligen Betriebsbremskreis zur Umsetzung vorgegeben werden können.

Bei einem elektrischen Ausfall des mindestens einen Betriebsbremskreises oder des Parkbremskreises kann im Rahmen einer redundanten Bremsung vorgesehen sein, die jeweiligen Bremsvorgaben direkt an das Anhänger-Steuerventil bzw. das Anhänger-Steuermodul oder ggf. an die jeweils noch funktionierenden Bremskreise auszusteuern, um den elektrischen Ausfall zu kompensieren. Dies kann durch eine entsprechende Vernetzung der jeweiligen Komponenten, z. B. über ein beliebiges fahrzeuginternes (Bus-)Netzwerk oder CAN-Bus oder über eine Direktverbindung der einzelnen Komponenten, gewährleistet werden. Demnach können alle genannten Bremsvorgaben als redundante Bremsvorgaben in jedem der Bremskreise dienen, die bei einem elektrischen Ausfall eines der Betriebsbremskreise bevorzugt direkt über das Anhänger-Steuerventil aber unter Umständen auch über den Parkbremskreis in das Bremssystem eingesteuert und anschließend - wie beschrieben - über das Anhänger-Steuerventil an den mindestens einen Betriebsbremskreis und/oder den Anhänger umgeleitet werden können.

Um dies zu gewährleisten, ist in einer Ausführungsform das Parkbrems-Steuermodul der elektrisch gesteuerten Parkbremse auch mit dem Anhänger-Steuerventil verbunden, um den Parkbrems-Bremsdruck oder einen damit zusammenhängenden Druck, beispielsweise eine intern im Parkbrems-Steuermodul erzeugten Steuerdruck, pneumatisch oder elektrisch an das Anhänger-Steuerventil zu übertragen und darin zu invertieren und als Redundanz-Steuerdruck auszugeben.

Gemäß einer alternativen Ausführungsform ist eine pneumatische Parkbremse vorgesehen, wobei dazu im Parkbremskreis ein Parkbremsventil angeordnet ist, das vom Fahrer manuell betätigt werden kann, um die Parkbrems-Bremsvorgabe anzufordern. Das Parkbremsventil gibt in Abhängigkeit der Parkbrems-Bremsvorgabe einen Parkbrems-Steuerdruck aus, der in einem Relaisventil luftmengenverstärkt und anschließend als Parkbrems-Bremsdruck an die Federspeicherbremsen ausgegeben wird, um die Parkbrems-Bremsvorgabe umzusetzen. Der vom Parkbremsventil ausgegebene Parkbrems-Steuerdruck oder ein damit zusammenhängender Druck wird an das Anhänger-Steuerventil über eine Druckleitung übertragen und darin über das inverse Relaisventil invertiert, um den Redundanz-Steuerdruck vorzugeben.

Somit können in zwei Alternativen eine Parkbrems-Bremsvorgabe über eine pneumatische Parkbremse oder eine Parkbrems-Bremsvorgabe und/oder eine Assistenz-Bremsvorgabe und/oder auch eine Betriebsbrems-Bremsvorgabe über eine elektrische Parkbremse im Parkbremskreis an das Anhänger-Steuerventil übertragen werden. Bei einem elektrischen Ausfall des mindestens einen Betriebsbremskreises kann also auch auf den im Fahrzeug vorhandenen Parkbremskreis zurückgegriffen werden, um über diesen eine Bremsvorgabe in Form der manuellen Parkbrems-Bremsvorgabe und/oder Betriebsbrems-Bremsvorgabe und/oder der automatisiert angeforderten Assistenz-Bremsvorgabe aufzunehmen und über das Anhänger-Steuerventil an die Betriebsbremsen im Fahrzeug und/oder im Anhänger umzuleiten und diese somit redundant anzusteuern. Diese Möglichkeit besteht neben der Möglichkeit, diese Bremsvorgaben auch direkt an das Anhänger-Steuermodul im Anhänger-Steuerventil zu übermitteln und darüber den Redundanz-Steuerdruck zu erzeugen und auszugeben. Welche redundante Umsetzung stattfindet, kann beispielsweise vom Anhänger-Steuermodul vorgegeben werden.

Um den vom Anhänger-Steuerventil über den Redundanz-Ausgang ausgegebenen Redundanz-Steuerdruck bei einem elektrischen Ausfall der Betriebsbremskreise an die Betriebsbremsen aussteuern zu können und diesen somit in den jeweiligen Betriebsbremskreis einspeisen zu können, ist eine vom Redundanz-Ausgang ausgehende Redundanz-Druckleitung zu den jeweiligen Betriebsbremskreisen geführt. Die Position der Einspeisung in den jeweiligen Betriebskreis kann wie folgt festgelegt sein:
In dem mindestens einen Betriebsbremskreis ist jeweils ein Druckmodulator vorgesehen, der ausgebildet ist, in Abhängigkeit des Betriebsbrems-Steuersignals einen Druckmodulator-Ausgangsdruck über einen Druckmodulator-Ausgang auszugeben, wobei der Druckmodulator-Ausgangsdruck als Betriebsbrems-Bremsdruck zur Umsetzung einer angeforderten Bremsvorgabe an die Betriebsbremsen übertragbar ist. Dies ist im Normalbetrieb, d.h. ohne einen elektrischen Ausfall in den Betriebsbremskreisen, des Bremssystems der Fall.

Der Druckmodulator weist einen pneumatischen Redundanzanschluss auf, wobei dem pneumatischen Redundanzanschluss wahlweise der Redundanz-Steuerdruck oder ein von der als elektropneumatisches Betriebsbremsventil ausgeführten Betriebsbrems-Betätigungsvorrichtung aufgrund der Betriebsbrems-Bremsvorgabe ausgegebener Betriebsbrems-Steuerdruck als Redundanzdruck vorgegeben werden kann. Die Einspeisung des Redundanz-Steuerdruckes in den Betriebsbremskreis kann somit gemäß dieser Ausführung über den pneumatischen Redundanzanschluss am jeweiligen Druckmodulator erfolgen.

Die wahlweise Vorgabe des Redundanzdruckes erfolgt über ein Umschaltventil, das dem Redundanzanschluss vorgeschaltet ist, wobei das Umschaltventil in einer ersten Umschaltventil-Schaltstellung das Betriebsbremsventil mit dem Redundanzanschluss verbindet zum Vorgeben des Betriebsbrems-Steuerdruckes als Redundanzdruck und in einer zweiten Umschaltventil-Schaltstellung den Redundanz-Steuerdruck an den Redundanzanschluss des Druckmodulators ausgibt zum Vorgeben des Redundanz-Steuerdruckes als Redundanzdruck.

Der Druckmodulator ist ausgebildet, falls eine Vorgabe des Betriebsbrems-Bremsdruckes in Abhängigkeit eines Betriebsbrems-Steuersignals nicht möglich ist, d.h. ein elektrischer Ausfall im jeweiligen Betriebsbremskreis vorliegt, den Druckmodulator-Ausgangsdruck in Abhängigkeit des dem Redundanzanschluss wahlweise zugeführten Betriebsbrems-Steuerdruckes oder Redundanz-Steuerdruckes zu erzeugen. Dadurch können in einfacher Weise zwei Rückfallebenen ausgebildet werden, in denen manuell oder automatisiert über das Anhänger-Steuerventil und/oder den Parkbremskreis oder manuell direkt über das Betriebsbremsventil eine redundante Bremsung vorgegeben und umgesetzt werden kann. Vorteilhafterweise ist dazu in einem bestehenden Bremssystem mit einem pneumatisch redundant sowie elektrisch ansteuerbaren Druckmodulator lediglich ein zusätzliches Umschaltventil vorzusehen, über das der im Anhänger-Steuerventil erzeugte Redundanz-Steuerdruck an den Redundanzanschluss ausgegeben werden kann.

Gemäß einer alternativen Ausführungsform, in der der Druckmodulator lediglich elektrisch ansteuerbar ist und demnach kein Redundanzdruck vorgegeben werden kann, ist das Umschaltventil den Betriebsbremsen in dem mindestens einen Betriebsbremskreis im den Betriebsbrems-Bremsdruck übertragenden Druckpfad vorgelagert, so dass als Betriebsbrems-Bremsdruck wahlweise der Druckmodulator-Ausgangsdruck oder der Redundanz-Steuerdruck vorgegeben werden können. Die Betriebsbrems-Betätigungsvorrichtung ist in dem Fall vorzugsweise rein elektrisch gesteuert ausgeführt, d. h. es ist kein Betriebsbremsventil vorgesehen.

In der ersten Umschaltventil-Schaltstellung wird der Druckmodulator-Ausgang mit den Betriebsbremsen verbunden zum Vorgeben des Druckmodulator-Ausgangsdruckes als Betriebsbrems-Bremsdruck an die Betriebsbremsen und in der zweiten Umschaltventil-Schaltstellung wird der Redundanz-Steuerdruck an die Betriebsbremsen ausgegeben zum Vorgeben des ggf. zusätzlich volumenverstärkten Redundanz-Steuerdruckes als Betriebsbrems-Bremsdruck an die Betriebsbremsen.

Das Umschaltventil kann dazu gemäß einer Ausführungsform direkt an einer dem mindestens einen Betriebsbremskreis zugeordneten Fahrzeugachse angeordnet sein, wobei das Anhänger-Steuerventil dann den erzeugten Redundanz-Steuerdruck über eine Redundanz-Druckleitung an das Umschaltventil vor oder nach dem Druckmodulator an der jeweiligen Fahrzeugachse ausgibt.

Gemäß einer alternativen Ausführungsform ist das Umschaltventil als ein Redundanz-Umschaltventil im Anhänger-Steuerventil integriert. Demnach ist dem Anhänger-Steuerventil je nach Ausführung des Bremssystems entweder der Betriebsbrems-Steuerdruck oder der Druckmodulator-Ausgangsdruck zuzuführen, um diese dem integrierten Redundanz-Umschaltventil vorzugeben. Die Vorgabe des Redundanzdruckes an den Redundanzanschluss erfolgt dann dadurch, dass in der ersten Umschaltventil-Schaltstellung das Betriebsbremsventil über das Redundanz-Umschaltventil mit einem zusätzlichen Redundanz-Ausgang am Anhänger-Steuerventil verbunden wird und in der zweiten Umschaltventil-Schaltstellung der im Anhänger-Steuerventil erzeugte Redundanz-Steuerdruck über das Redundanz-Umschaltventil an den Redundanz-Ausgang ausgegeben wird, wobei der Redundanz-Ausgang des Anhänger-Steuerventils mit dem Redundanzanschluss des Druckmodulators bzw. mit den Betriebsbremsen verbunden ist.

Somit kann in zwei alternativen Anordnungen des Umschaltventils vorteilhafterweise eine Umschaltung zwischen dem Fahrerwunsch und dem Redundanz-Steuerdruck stattfinden, wobei bei der im Anhänger-Steuerventil integrierten Lösung eine verbesserte Nachrüstbarkeit gegeben ist. In dem Fall kann die Umschaltfunktion mit dem Einbau des Anhänger-Steuerventils in das Fahrzeug gleichzeitig nachgerüstet werden. Zudem kann Platz an den Fahrzeugachsen gespart werden, da eine Verbauung der Umschaltventile an der Fahrzeugachse entfallen kann. Zudem kann für beide Fahrzeugachsen lediglich ein Umschaltventil verwendet werden.

Auf der anderen Seite kann mit den an den Fahrzeugachsen angeordneten Umschaltventilen eine achsweise unterschiedliche redundante Ansteuerung bewirkt werden und bei bereits vorhandenem Anhängersteuerventil mit Invertierungsfunktion kann das Bremssystem durch ein Nachrüsten einzelner Umschaltventile an den Fahrzeugachsen modular aufgerüstet werden.

Ist in der integrierten Lösung vorgesehen, den Redundanz-Steuerdruck auch als Anhänger-Steuerdruck zur Ausgabe an einen Anhänger zu verwenden, ist der Redundanz-Steuerdruck separat über einen Anhänger-Ausgang ("gelber Kupplungskopf") als Anhänger-Steuerdruck an den Anhänger auszugeben und über den Redundanz-Ausgang an den jeweiligen Betriebsbremskreis. In dem Fall können also nicht wie bei der anderen Lösung die Vorgaben an den Anhänger und den Betriebsbremskreis über denselben Ausgang am Anhänger-Steuerventil erfolgen.

Das Umschalten kann situationsbedingt beispielsweise dann erfolgen, wenn eine redundante Betriebsbrems-Bremsvorgabe vom Fahrer erfasst wurde und über diese Betriebsbrems-Bremsvorgabe eine stärkere Bremsung angefordert wird als über eine anderweitige, nicht vom Fahrer angeforderte redundante Bremsvorgabe, die zum jeweiligen Zeitpunkt gerade umgesetzt wird. Andernfalls kann auch vorgesehen sein, dass bei Erfassen eines Betriebsbrems-Bremswunsches durch den Fahrer eine gerade umgesetzte anderweitige Bremsvorgabe, die insbesondere eine stärkere Bremswirkung als die manuell angeforderte Betriebsbrems-Bremsvorgabe verursacht, kontrolliert beendet wird und anschließend das Umschaltventil in die erste Umschaltventil-Schaltstellung gebracht wird, in der die Betriebsbrems-Bremsvorgabe durch den Fahrer umgesetzt werden kann. Durch dieses Vorgehen können Instabilitäten bei der Umschaltung vermieden werden.

Das Umschalten des Umschaltventils in die erste Umschaltventil-Schaltstellung bei Vorliegen eines Fahrerwunsches kann hierbei je nach Art des Umschaltventils pneumatisch oder elektrisch gesteuert erfolgen, d. h. das Umschaltventil wird dadurch, dass am Umschaltventil ein gewisser Betriebsbrems-Bremsdruck wirkt automatisch in die erste Umschaltventil-Schaltstellung umgeschaltet oder der Betriebsbrems-Bremsdruck wird gemessen, vorzugsweise mit einem Drucksensor, und in Abhängigkeit der Messung wird das Umschaltventil elektrisch gesteuert in die erste Umschaltventil-Schaltstellung gebracht.

In beiden Ausführungsform kann das Umschaltventil dazu als ein Wechselventil bzw. Select-High-Ventil oder als ein elektrisch oder pneumatisch steuerbares 3/2-Wegeventil ausgeführt sein, wobei das Wechselventil ausgebildet ist, den höheren der beiden an den Umschaltventil-Eingängen anliegenden Drücke an den Umschaltventil-Ausgang auszugeben (Select-High-Ventil). Um in diesem Fall situationsabhängig auf den Fahrerwunsch umzuschalten zu können, ist dafür zu sorgen, dass der Redundanz-Steuerdruck, der dem Wechselventil ebenfalls zugeführt wird, kontrolliert verringert wird, d.h. eine bereits durchgeführte redundante Bremsung kontrolliert beendet wird. Dadurch wird der Redundanz-Steuerdruck bei Vorliegen einer über das Betriebsbremsventil pneumatisch vorgegebenen Betriebsbrems-Bremsvorgabe geringer als der Betriebsbrems-Steuerdruck, so dass das als Select-High-Ventil ausgeführte Wechselventil automatisch in die erste Umschaltventil-Schaltstellung gebracht wird.

Das 3/2-Wegeventil schaltet in Abhängigkeit eines beispielsweise elektrisch vorgegebenen Umschaltsignals in die erste Schaltstellung oder die zweite Schaltstellung. Somit kann vorteilhafterweise mit beiden Varianten des Umschaltventils automatisch oder aktiv gesteuert vorgegeben werden, welche Bremsvorgabe den Betriebsbremsen insbesondere bei einem elektrischen Ausfall des mindestens einen Betriebsbremskreises zugeführt wird.

Das Umschaltsignal kann dazu vorzugsweise in Abhängigkeit davon erzeugt werden, ob eine manuell angeforderte Betriebsbrems-Bremsvorgabe vorliegt, d.h. der Fahrer in die Bremsung eingreifen möchte. Dazu kann beispielsweise ein Drucksensor im Bremssystem, vorzugsweise im Anhänger-Steuerventil oder am Betriebsbremsventil, vorgesehen sein, wobei der Drucksensor ausgebildet ist, den vom Betriebsbremsventil ausgesteuerten Betriebsbrems-Steuerdruck zu messen und in Abhängigkeit davon ein Bremswunsch-Signal auszugeben. In Abhängigkeit des Bremswunsch-Signals wird dann das Umschaltsignal an das 3/2-Wegeventil ausgegeben, um die entsprechende Umschaltventil-Schaltstellung einzustellen. Gemäß einer weiteren Alternative kann das 3/2-Wegeventil auch einen pneumatischen Steuereingang aufweisen, dem z.B. der Betriebsbrems-Steuerdruck oder ein dazu proportionaler Druck als Umschalt-Steuerdruck zugeführt wird. Aufgrund des Umschalt-Steuerdruckes am pneumatischen Steuereingang kann das Umschaltventil dann in die entsprechende Umschaltventil-Schaltstellung umgeschaltet werden. Alternativ kann der Bremswunsch auch elektrisch erfasst werden, wenn beispielsweise eine rein elektrische Betriebsbrems-Betätigungsvorrichtung vorliegt, und in Abhängigkeit dieser elektrischen Erfassung die entsprechende Umschaltventil-Schaltstellung eingestellt werden.

In beiden Varianten des Umschaltventils kann also insbesondere bei einem elektrischen Ausfall des mindestens einen Betriebsbremskreises und einer daraufhin veranlassten redundanten Bremsung gewährleistet werden, dass der Fahrer durch entsprechendes Umschalten des Umschaltventils redundant in die Bremsung eingreifen kann, falls dieser am Platz oder aufmerksam ist und auch selbst über das Betriebsbremsventil pneumatisch redundant eingreift. Ein möglicherweise aufgrund einer Bremsvorgabe im Parkbremskreis ebenfalls redundant vorgegebener Redundanz-Steuerdruck kann dann bei Vorliegen einer Betriebsbrems-Bremsvorgabe durch den Fahrer kontrolliert beendet werden bevor die erste Umschaltventil-Schaltstellung eingestellt wird, um anschließend den Fahrerwunsch umzusetzen.

Um in bestimmten Situationen eine redundante Bremsung durch Vorgabe des Redundanz-Steuerdruckes an mindestens einen der Betriebsbremskreise über die Redundanz-Druckleitung zu verhindern, kann vorgesehen sein, in der Redundanz-Druckleitung ein dem Redundanz-Ausgang des Anhänger-Steuerventils nachgeschaltetes Abschaltventil anzuordnen, wobei das Abschaltventil in einer ersten Abschaltventil-Schaltstellung die Redundanz-Druckleitung mit einem Entlüftungsanschluss verbindet zum Entlüften der Redundanz-Druckleitung und in einer zweiten Abschaltventil-Schaltstellung die Redundanz-Druckleitung mit dem Redundanz-Ausgang des Anhänger-Steuerventils verbindet zum redundanten Vorgeben des Betriebsbrems-Bremsdruckes in Abhängigkeit des Redundanz-Steuerdruckes.

Das zusätzliche Abschaltventil ist hierbei insbesondere dann vorteilhaft für die gewünschte Abschaltfunktion, wenn als Umschaltventil ein Wechselventil vorgesehen ist. Ist das Umschaltventil jedoch als elektrisch steuerbares 3/2-Wegeventil ausgeführt, kann das Abschaltventil auch entfallen und die Abschaltfunktion des Abschaltventils stattdessen auch durch das ohnehin vorhandene Umschaltventil gewährleistet werden, indem dieses durch eine elektrische Ansteuerung in die entsprechende Umschaltventil-Schaltstellung gebracht wird, in der der Betriebsbrems-Bremsdruck nicht durch den Redundanz-Steuerdruck vorgegeben wird sondern durch den Betriebsbrems-Steuerdruck, der ohne eine Betätigung des Betriebsbremsventils ebenfalls zu einer Entlüftung führt.

Das Abschaltventil kann in entsprechender Form auch im Anhänger-Steuerventil integriert sein und somit vorgeben, ob an dem Redundanz-Ausgang des Anhänger-Steuerventils ein Druck ausgegeben oder ob die Redundanz-Druckleitung entlüftet werden soll. Dadurch können die Nachrüstbarkeit sowie der Platzbedarf verbessert werden, da lediglich ein kompaktes Bauteil nachzurüsten bzw. vorzusehen ist.

So kann in einfacher Weise die Vorgabe des Redundanz-Steuerdruckes an die Betriebsbremsen verhindert werden, wenn beispielsweise bei einem dauerhaften Abstellen des Fahrzeuges nicht gewünscht ist, die Betriebsbremsen dauerhaft mit einem Betriebsbrems-Bremsdruck zu versorgen. Bei einem Abstellen können dazu in der entsprechenden Abschaltventil-Schaltstellung die Betriebsbremsen über den Entlüftungsanschluss entlüftet werden. Dadurch kann vermieden werden, dass Betriebsbrems-Druckmittelvorräte im Bremssystem entlüftet werden, wenn im Betriebsbremskreis Leckagen auftreten.

Erfindungsgemäß kann demnach in einem Verfahren zunächst festgestellt werden, ob der Betriebsbrems-Bremsdruck in dem mindestens einen Betriebsbremskreis in Abhängigkeit des z.B. von dem Betriebsbrems-Steuermodul ausgebbaren Betriebsbrems-Steuersignals zum Umsetzen der jeweiligen Bremsvorgabe an die Betriebsbremsen möglich ist und demnach die gewünschte Bremsvorgabe elektrisch gesteuert umgesetzt werden kann. Ist dies nicht der Fall, d.h. liegt beispielsweise ein Defekt in dem Betriebsbrems-Steuermodul vor und kann dieses entsprechend keine Betriebsbrems-Steuersignale ausgeben, wird der Redundanz-Steuerdruck in dem Anhänger-Steuerventil in Abhängigkeit der dem Anhänger-Steuermodul elektrisch vorgegebenen Bremsvorgabe wie oben beschrieben erzeugt und der Betriebsbrems-Bremsdruck in dem mindestens einen Betriebsbremskreis und/oder auch der Anhänger-Steuerdruck für einen möglicherweise angehängten Anhänger in Abhängigkeit des Redundanz-Steuerdruckes wie beschrieben ausgegeben.

Dabei kann entweder vorgesehen sein, den Redundanz-Steuerdruck direkt als Betriebsbrems-Bremsdruck an die Betriebsbremsen auszusteuern oder mit diesem zunächst den Druckmodulator pneumatisch redundant anzusteuern, woraufhin der Druckmodulator in Abhängigkeit davon den Betriebsbrems-Bremsdruck erzeugt und an die Betriebsbremsen aussteuert.

Die Erfindung wird im Folgenden anhand mehrerer Ausführungsbeispiele näher erläutert. Es zeigen:
- Fig. 1a, b, c: elektronisch steuerbare Bremssysteme mit elektrisch oder pneumatisch steuerbarer Parkbremse in unterschiedlichen Ausführungsformen;
- Fig. 2a, b, c, d, e: verschiedene Ausführungsformen von Umschaltventilen in einem Bremssystem gemäß Fig. 1;
- Fig. 3: das Bremssystem gemäß Fig. 1 mit einem Abschaltventil zum Ausbilden einer Abschaltfunktion; und
- Fig. 4, 5: Anhänger-Steuerventile in alternativen Ausführungsformen.

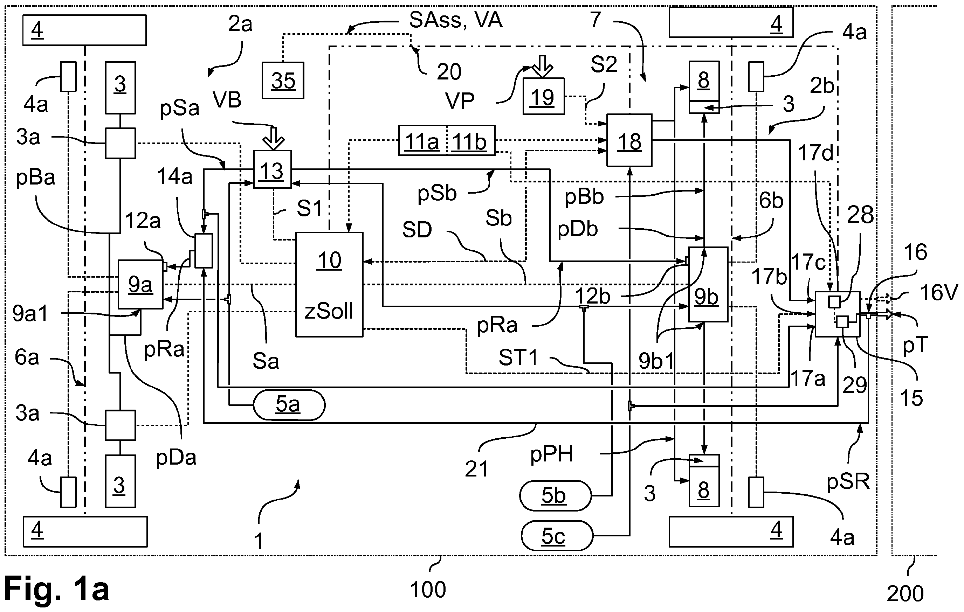

In Fig. 1a ist schematisch ein Fahrzeug 100 mit einem Bremssystem 1 dargestellt, das in zwei Betriebsbremskreisen 2a, 2b über Betriebsbremsen 3 an den Rädern 4 abgebremst werden kann. Ein Vorderachs-Betriebsbremskreis 2a ist einer Vorderachse 6a und ein Hinterachs-Betriebsbremskreis 2b einer Hinterachse 6b zugeordnet. Es können auch weitere Fahrzeugachsen vorgesehen sein, denen die Betriebsbremskreise 6a und 6b oder weitere Betriebsbremskreise zugeordnet sind. Den Betriebsbremskreisen 2a, 2b ist achsweise jeweils ein Druckmittelvorrat 5a, 5b zugeordnet.

Der Hinterachse 6b ist weiterhin ein Parkbremskreis 7 zugeordnet, wobei die Räder 4 an der Hinterachse 6b in diesem Parkbremskreis 7 über Federspeicherbremsen 8 abgebremst werden können, so dass die Räder 4 der Hinterachse 6b sowohl im Hinterachs-Betriebsbremskreis 2b über die Betriebsbremsen 3 und im Parkbremskreis 7 über die Federspeicherbremsen 8 verzögert werden können. An der Hinterachse 6b sind dazu kombinierte Betriebs-/Federspeicherbremsen vorgesehen. Der Parkbremskreis 7 wird von einem eigenständigen Parkbrems-Druckmittelvorrat 5c mit Druckmittel versorgt.

Zum Betätigen der Betriebsbremsen 3 und somit zum Umsetzen einer angeforderten Bremsvorgabe, die durch eine Fahrzeug-Soll-Verzögerung zSoll oder einen Soll-Bremsdruck charakterisiert wird, ist in den beiden Betriebsbremskreisen 2a, 2b an der jeweiligen Fahrzeugachse 6a, 6b jeweils ein Druckmodulator 9a, 9b angeordnet, wobei beide Druckmodulatoren 9a, 9b gemäß diesem Ausführungsbeispiel elektrisch oder pneumatisch angesteuert werden können, um einen bestimmten Betriebsbrems-Bremsdruck pBa, pBb an die Betriebsbremsen 3 der jeweiligen Fahrzeugachse 6a, 6b auszusteuern und die Betriebsbremsen 3 somit zuzuspannen. Grundsätzlich kann der Betriebsbrems-Bremsdruck pBa, pBb für jede der einzelnen Betriebsbremsen 3 individuell vorgegeben werden, beispielsweise im Rahmen einer Bremsschlupfregelung, die anhand von Daten von Raddrehzahlsensoren 4a an den einzelnen Rädern 4 durchgeführt wird. An der Hinterachse 6b kann die Bremsschlupfregelung direkt durch den Hinterachs-Druckmodulator 9b erfolgen und an der Vorderachse 6a über den Betriebsbremsen 3 vorgeschaltete ABS-Steuerventile 3a.

Im normalen Fahrbetrieb werden die jeweiligen Druckmodulatoren 9a, 9b elektrisch über Betriebsbrems-Steuersignale Sa, Sb angesteuert, wobei die jeweiligen Betriebsbrems-Steuersignale Sa, Sb in einem Betriebsbrems-Steuermodul 10 in Abhängigkeit der jeweiligen Bremsvorgabe bzw. der Fahrzeug-Soll-Verzögerung zSoll derartig erzeugt werden, dass der jeweilige Druckmodulator 9a, 9b einen Betriebsbrems-Bremsdruck pBa, pBb an die Betriebsbremsen 3 aussteuert, mit dem die angeforderte Bremsvorgabe umgesetzt wird. Das Betriebsbrems-Steuersignal Sa, Sb kann dabei beispielsweise über einen CAN-Bus, ein anderes Netzwerk, ein analoges oder pulsweitenmoduliertes Steuersignal ausgegeben werden, mit dem in bekannter Weise im Druckmodulator 9a, 9b über Druckventile ein Druckmodulator-Ausgangsdruck pDa, pDb erzeugt wird, der über einen Druckmodulator-Ausgang 9a1, 9b1 als Betriebsbrems-Bremsdruck pBa, pBb an die jeweilige Betriebsbremse 3 ausgegeben wird.

Die Druckmodulatoren 9a, 9b sind somit jeweils mit dem Betriebsbrems-Steuermodul 10 elektrisch verbunden, das die Bremswirkung in den beiden Betriebsbrems-Bremskreisen 2a, 2b individuell elektrisch steuern kann und dabei als ein zentrales Steuermodul ausgebildet ist, das im Normalbetrieb für die elektrische Umsetzung der Bremsvorgabe in beiden Betriebsbrems-Bremskreisen 2a, 2b verantwortlich ist. Das Betriebsbrems-Steuermodul 10 sowie die jeweiligen Druckmodulatoren 9a, 9b sowie weitere Komponenten der jeweiligen Betriebsbrems-Bremskreise 2a, 2b werden gemäß diesem Ausführungsbeispiel von einer ersten Energiequelle 11a mit Energie versorgt.

Die Fahrzeug-Soll-Verzögerung zSoll kann hierbei manuell durch den Fahrer festgelegt werden, der durch eine manuelle Betätigung eines Betriebsbremsventils 13 beispielsweise über ein Bremspedal eine Betriebsbrems-Bremsvorgabe VB vorgibt, die über ein Betriebsbrems-Betätigungssignal S1 an das Betriebsbrems-Steuermodul 10 ausgegeben wird und aus der die Fahrzeug-Soll-Verzögerung zSoll folgt. Weiterhin kann im automatisierten Fahrbetrieb von einem Assistenz-Steuermodul 35 eine automatisiert vorgegebene Assistenz-Bremsvorgabe VA über ein Assistenz-Steuersignal SAss ausgegeben werden, die beispielsweise über einen CAN-Bus 20 oder ein anderes Netzwerk im Fahrzeug 100 auch auf das Betriebsbrems-Steuermodul 10 übertragen wird und ebenfalls einer bestimmten Fahrzeug-Soll-Verzögerung zSoll entspricht.

Das Assistenz-Steuermodul 35 ist hierbei ausgebildet, das Fahrzeug 100 automatisiert anhand von Umfeldinformationen zu steuern, insbesondere gemäß der Assistenz-Bremsvorgabe VA abzubremsen, und in Abhängigkeit davon das Assistenz-Steuersignal SAss insbesondere an das Bremssystem 1 auszugeben.

Um bei einem elektrischen Ausfall weiterhin eine Umsetzung der Betriebsbrems-Bremsvorgabe VB oder der Assistenz-Bremsvorgabe VA, d.h. der Fahrzeug-Soll-Verzögerung zSoll, zu gewährleisten, kann auf mehrere Rückfallebenen ausgewichen werden. Durch die Rückfallebenen wird hierbei sichergestellt, dass das elektrisch steuerbare Bremssystem 1 für einen gewissen Automatisierungsgrad im Rahmen eines elektronisch gesteuerten autonomen Fahrbetriebs geeignet ist. Die Rückfallebenen sind wie folgt ausgestaltet:
In einer ersten Rückfallebene werden bei Feststellen eines elektrischen Ausfalls in einer der Komponenten der beiden Betriebsbremskreise 2a, 2b in dem jeweiligen Druckmodulator 9a, 9b automatisch pneumatische Redundanzanschlüsse 12a, 12b aktiviert. Diese bewirken, dass der jeweilige Druckmodulator 9a, 9b nicht mehr elektrisch über die Betriebsbrems-Steuersignale Sa, Sb angesteuert werden kann, sondern nur noch pneumatisch in Abhängigkeit eines vorgegebenen Redundanzdruckes pRa, pRb, der am jeweiligen pneumatischen Redundanzanschluss 12a, 12b anliegt. Die Vorgabe des jeweiligen Redundanzdruckes pRa, pRb erfolgt gemäß Fig. 1a achsweise unterschiedlich.

Demnach wird in dem Hinterachs-Betriebsbremskreis 2b als Hinterachs-Redundanzdruck pRb über eine pneumatische Leitung ein von dem Betriebsbremsventil 13 ausgesteuerter Hinterachs-Betriebsbrems-Steuerdruck pSb an den pneumatischen Hinterachs-Redundanzanschluss 12b ausgegeben. Das Betriebsbremsventil 13 steuert den Hinterachs-Betriebsbrems-Steuerdruck pSb hierbei in Abhängigkeit der vom Fahrer manuell vorgegebenen Betriebsbrems-Bremsvorgabe VB aus, so dass durch den Hinterachs-Betriebsbrems-Steuerdruck pSb pneumatisch dieselbe Bremsung angefordert wird wie über das Hinterachs-Betriebsbrems-Steuersignal Sb.

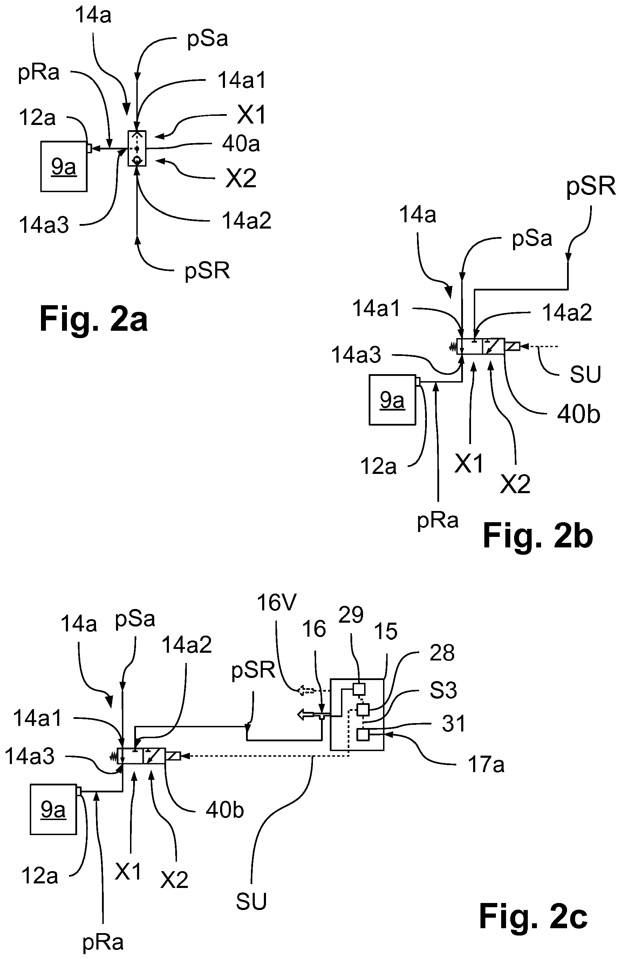

In dem Vorderachs-Betriebsbremskreis 2a kann als Vorderachs-Redundanzdruck pRa z.B. ein ebenfalls vom Betriebsbremsventil 13 gemäß der Betriebsbrems-Bremsvorgabe VB ausgesteuerter Vorderachs-Betriebsbrems-Steuerdruck pSa vorgegeben werden, wobei dieser im Gegensatz zum Hinterachs-Betriebsbremskreis 2b nicht direkt an den Vorderachs-Druckmodulator 9a bzw. dessen pneumatischen Vorderachs-Redundanzanschluss 12a ausgegeben wird. Vielmehr ist dem pneumatischen Vorderachs-Redundanzanschluss 12a ein Vorderachs-Umschaltventil 14a vorgelagert, das in zwei Umschaltventil-Schaltstellungen X1, X2 umgeschaltet werden kann. Der Übersichtlichkeit halber sind die Bezugszeichen, die im Folgenden für die Komponenten des Vorderachs-Umschaltventils 14a verwendet werden, in Fig. 1a nicht dargestellt. Es wird stattdessen auf die Detailansicht in den Figuren 2a und 2b verwiesen.

Das Vorderachs-Umschaltventil 14a weist einen ersten Vorderachs-Umschaltventil-Eingang 14a1 sowie einen zweiten Vorderachs-Umschaltventil-Eingang 14a2 und einen Vorderachs-Umschaltventil-Ausgang 14a3 auf, wobei der Vorderachs-Umschaltventil-Ausgang 14a3 mit dem pneumatischen Vorderachs-Redundanzanschluss 12a am Vorderachs-Druckmodulators 9a und der erste Vorderachs-Umschaltventil-Eingang 14a1 mit dem Betriebsbremsventil 13 verbunden ist. Befindet sich das Vorderachs-Umschaltventil 14a in seiner ersten Umschaltventil-Schaltstellung X1 wird der vom Betriebsbremsventil 13 vorgegebene, am ersten Vorderachs-Umschaltventil-Eingang 14a1 anliegende Vorderachs-Betriebsbrems-Steuerdruck pSa an den pneumatischen Vorderachs-Redundanzanschluss 12a durchgeleitet, so dass in dieser ersten Umschaltventil-Schaltstellung X1 vom Vorderachs-Druckmodulator 9a die pneumatisch vorgegebene Betriebsbrems-Bremsvorgabe VB des Fahrers umgesetzt wird, indem der Vorderachs-Betriebsbrems-Steuerdruck pSa luftmengenverstärkt an die Betriebsbremsen 3 der Vorderachse 6a ausgegeben wird.

Die durch das Betriebsbremsventil 13 vom Fahrer vorgegebene Betriebsbrems-Bremsvorgabe VB, d.h. eine bestimmte vorgegebene Fahrzeug-Soll-Verzögerung zSoll, kann somit im Normalbetrieb in Abhängigkeit der elektronisch über die jeweiligen von dem Betriebsbrems-Steuermodul 10 ausgegebenen Betriebsbrems-Steuersignale Sa, Sb oder in der ersten Rückfallebene in Abhängigkeit der pneumatisch über die jeweiligen vom Betriebsbremsventil 13 direkt ausgesteuerten Betriebsbrems-Steuerdrücke pSa, pSb von dem jeweiligen Druckmodulator 9a, 9b umgesetzt werden.

Der zweite Vorderachs-Umschaltventil-Eingang 14a2 des Vorderachs-Umschaltventils 14a ist über eine Redundanz-Druckleitung 21 mit einem Anhänger-Steuerventil 15 verbunden. Dadurch kann in der zweiten Umschaltventil-Schaltstellung X2 des Vorderachs-Umschaltventils 14a ein aus einem Redundanz-Ausgang 16 des Anhänger-Steuerventils 15 ausgegebener Redundanz-Steuerdruck pSR als Vorderachs-Redundanzdruck pRa an den pneumatischen Vorderachs-Redundanzanschluss 12a des Vorderachs-Druckmodulators 9a durchgeleitet werden. Dadurch können die Betriebsbremsen 3 an der Vorderachse 6a zusätzlich mit einem Vorderachs-Bremsdruck pBa beaufschlagt werden, der von dem Redundanz-Steuerdruck pSR abhängig ist. Dies ermöglicht die Ausbildung einer zweiten Rückfallebene wie folgt:
Die Vorgabe des Redundanz-Steuerdruckes pSR durch das Anhänger-Steuerventil 15 kann grundsätzlich in Abhängigkeit unterschiedlicher Pfade erfolgen:
Gemäß Fig. 1a kann dem Anhänger-Steuerventil 15 über einen ersten Anhängersteuerventil-Eingang 17a über eine Druckleitung z.B. der Vorderachs-Betriebsbrems-Steuerdruck pSa, der vom Betriebsbremsventil 13 in Abhängigkeit der Betriebsbrems-Bremsvorgabe VB direkt ausgesteuert wird, zugeführt werden. Im Anhänger-Steuerventil 15 wird dieser luftmengenverstärkt und anschließend als Redundanz-Steuerdruck pSR an den Redundanz-Ausgang 16 ausgegeben, wobei die Luftmengenverstärkung mit dem Druckmittel aus dem Parkbrems-Druckmittelvorrat 5c erfolgt, der dem Anhänger-Steuerventil 15 ebenfalls zugeführt wird. Der im Anhänger-Steuerventil 15 erzeugte Redundanz-Steuerdruck pSR kann über den Redundanz-Ausgang 16 außerdem als Anhänger-Steuerdruck pT an einen möglicherweise angehängten Anhänger 200 ausgegeben werden, um auch diesen in Abhängigkeit der Betriebsbrems-Bremsvorgabe VB vom Fahrer abzubremsen.

Ein zusätzlicher Vorratsdruck-Ausgang 16V am Anhänger-Steuerventil 15 dient hierbei dem Übertragen des Druckmittels aus dem Parkbrems-Druckmittelvorrat 5c an den Anhänger 200, wobei der Vorratsdruck-Ausgang 16V dem "roten Kupplungskopf" eines herkömmlichen Anhänger-Steuerventils entspricht. Der Redundanz-Ausgang 16 entspricht demnach dem "gelben Kupplungskopf".

Weiterhin kann eine elektrische Vorgabe der Betriebsbrems-Bremsvorgabe VB an das Anhänger-Steuerventil 15 über einen zweiten Anhängersteuerventil-Eingang 17b erfolgen, wobei die elektrische Bremsvorgabe gemäß dieser Ausführungsform über ein von dem Betriebsbrems-Steuermodul 10 ausgegebenes erstes Redundanz-Steuersignal ST1 erfolgt, das in Abhängigkeit der Fahrzeug-Soll-Verzögerung zSoll gebildet ist. Über den zweiten Anhängersteuerventil-Eingang 17b wird das erste Redundanz-Steuersignal ST1 an ein Anhänger-Steuermodul 28 und ein Vorsteuermodul 29 im Anhänger-Steuerventil 15 übertragen und dieses in Abhängigkeit des ersten Redundanz-Steuersignals ST1 derartig angesteuert, dass durch Öffnen und Schlie-ßen von Druckventilen im Vorsteuermodul 29 mit dem Druckmittel aus dem Parkbrems-Druckmittelvorrat 5c ein der Betriebsbrems-Bremsvorgabe VB entsprechender Druck erzeugt wird, der als Redundanz-Steuerdruck pSR am Redundanz-Ausgang 16 ausgegeben wird. Somit kann eine vom Betriebsbrems-Steuermodul 10 elektrisch vorverarbeitete Betriebsbrems-Bremsvorgabe VB über das Anhänger-Steuerventil 15 auch als Anhänger-Steuerdruck pT, der dem Redundanz-Steuerdruck pSR entspricht, an einen möglicherweise angehängten Anhänger 200 übergeben werden.

Ein dritter Anhängersteuerventil-Eingang 17c am Anhänger-Steuerventil 15 ist über eine Druckleitung mit einem Parkbrems-Steuermodul 18 verbunden, das im Parkbremskreis 7 beispielsweise in Abhängigkeit einer vom Fahrer manuell über eine Parkbrems-Betätigungseinrichtung 19 vorgegebenen Parkbrems-Bremsvorgabe VP einen Parkbrems-Bremsdruck pPH erzeugt und diesen oder einen davon abhängigen Steuerdruck an die Federspeicherbremsen 8 ausgibt, so dass über die Federspeicherbremsen 8 eine bestimmte Bremswirkung an der Hinterachse 6b erzielt werden kann. Dazu wird gemäß Fig. 1a bei Vorliegen einer Parkbrems-Bremsvorgabe VP von der Parkbrems-Betätigungseinrichtung 19 auf elektronischem Wege ein Parkbrems-Betätigungssignal S2 an das Parkbrems-Steuermodul 18 ausgegeben. Im Rahmen dieser Parkbremsung ist hierbei lediglich ein vollständiges Öffnen oder Zuspannen der Federspeicherbremsen 8 vorgesehen. Beispielhaft ist ein derartiges Parkbrems-Steuermodul 18 in DE 10 2015 008 377 A1 beschrieben, deren Inhalt hiermit durch Bezugnahme im vollen Umfang eingeschlossen ist.

Weiterhin kann auch die automatisiert vorgegebene Assistenz-Bremsvorgabe VA über den CAN-Bus 20 bzw. das Assistenz-Steuersignal SAss an das Parkbrems-Steuermodul 18 übertragen und von diesem auch umgesetzt werden, beispielsweise im Rahmen einer automatisiert vorgegebenen Hilfsbremsfunktion oder einer automatisiert vorgegebenen Notbremsfunktion oder einer automatisiert vorgegebenen Parkbremsfunktion. Dazu wird der Parkbrems-Bremsdruck pPH von dem Parkbrems-Steuermodul 18 in Abhängigkeit dieser automatisiert vorgegebenen Assistenz-Bremsvorgabe VP erzeugt und an die Federspeicherbremsen 8 ausgesteuert, um auch während der Fahrt eine unterstützende Bremsung oder im Stillstand ein Abstellen über den Parkbremskreis 7 und die Federspeicherbremsen 8 bewirken zu können.

Im Rahmen dessen ist auch eine abgestufte Bremsung im Parkbremskreis 7 möglich.

Weiterhin kann die automatisiert vorgegebene Assistenz-Bremsvorgabe VA ausgehend vom CAN-Bus 20 über einen vierten Anhängersteuerventil-Eingang 17d an das Anhänger-Steuerventil 15 übertragen werden. Im Anhänger-Steuerventil 15 wird aus der Assistenz-Bremsvorgabe VA gesteuert von dem Anhänger-Steuermodul 28 über das Vorsteuermodul 29 der Redundanz-Steuerdruck pSR erzeugt und an den Redundanz-Ausgang 16 ausgegeben, um eine automatisiert angeforderte Bremsung im Fahrzeug 100 und/oder im Anhänger 200 umzusetzen.

Die Energieversorgung erfolgt über zwei Energiequellen 11a, 11b, wobei das Parkbrems-Steuermodul 18 sowie das Anhänger-Steuerventil 15 mit einer zweiten Energiequelle 11b verbunden sind, die von der ersten Energiequelle 11a unabhängig ist, so dass die Betriebsbremskreise 2a, 2b und der Parkbremskreis 7 sowie das Anhänger-Steuerventil 15 energetisch unabhängig voneinander betrieben werden. Bei einem Ausfall der ersten Energiequelle 11a können somit zumindest die Assistenz-Bremsvorgabe VA und die Parkbrems-Bremsvorgabe VP über den Parkbremskreis 7 und das Anhänger-Steuerventil 15 vorgegeben und ausgesteuert werden. Die Unabhängigkeit der Energiequellen 11a, 11b kann dabei entweder dadurch gewährleistet werden, dass voneinander getrennte Energiequellen 11a, 11b eingesetzt werden oder aber eine galvanische Trennung zwischen den Energiequellen 11a, 11b stattfindet.

Der beschriebene Aufbau des elektronischen Bremssystems 1 gemäß Fig. 1a erlaubt bei einem Ausfall der ersten Energiequelle 11a oder der elektrischen Komponenten der Betriebsbremskreise 2a, 2b, d.h. für den Fall, dass keine Aussteuerung eines Betriebsbrems-Bremsdruckes pBa, pBb gemäß der elektrischen Vorgabe Sa, Sb bzw. durch das Betriebsbrems-Steuermodul 10 und durch die Druckmodulatoren 9a, 9b mehr möglich ist, auch eine Umsetzung einer Bremsvorgabe wie folgt, um den Ausfall der Betriebsbremskreise 2a, 2b zu kompensieren:
Wie bereits beschrieben, kann in der ersten Rückfallebene eine vom Fahrer pneumatisch über das Betriebsbremsventil 13 vorgegebene Betriebsbrems-Bremsvorgabe VB durch eine entsprechende Umschaltung des Vorderachs-Umschaltventils 14a in die erste Umschaltventil-Schaltstellung X1 an den pneumatischen Vorderachs-Redundanzanschluss 12a des Vorderachs-Druckmodulators 9a und weiterhin auch direkt an den pneumatischen Hinterachs-Redundanzanschluss 12b des Hinterachs-Druckmodulators 9b vorgegeben werden. Damit kann bei einem elektrischen Ausfall dennoch die vom Fahrer vorgegebene Betriebsbrems-Bremsvorgabe VB über die Betriebsbremsen 3 an beiden Fahrzeugachsen 6a, 6b redundant bewirkt werden.

In einer zweiten Rückfallebene, die dann eingreift, wenn der Fahrer bei einem elektrischen Ausfall der Betriebsbremskreise 2a, 2b nicht zur Verfügung steht, da er z.B. unaufmerksam ist oder sich im Falle von höher automatisierten Fahrmanövern nicht am Platz befindet, kann auch die automatisiert vorgegebene Assistenz-Bremsvorgabe VA durch die Betriebsbremsen 3 an zumindest einer Fahrzeugachse 6a, 6b umgesetzt werden. Dieser Fall kann beispielsweise bei einer automatisiert gesteuerten Fahrt des Fahrzeuges 100 auftreten, bei der die Assistenz-Bremsvorgabe VA beispielsweise in Form der Fahrzeug-Soll-Verzögerung über den CAN-Bus 20 von dem Assistenz-Steuermodul 35 vorgegeben wird.

Das automatisierte Eingreifen erfolgt dann dadurch, dass bei Erkennen eines elektrischen Ausfalls, beispielsweise in der ersten Energiequelle 11a oder dem Betriebsbrems-Steuermodul 10 oder den Druckmodulatoren 9a, 9b, die automatisiert vorgegebene Assistenz-Bremsvorgabe VA, die über die Betriebsbremskreise 2a, 2b bewirkt werden soll, statt von dem Betriebsbrems-Steuermodul 10 von dem im Anhänger-Steuerventil 15 angeordneten Anhänger-Steuermodul 28 verarbeitet wird. D.h. die über das Assistenz-Steuersignal SAss übertragene Assistenz-Bremsvorgabe VA bzw. die Fahrzeug-Soll-Verzögerung zSoll wird nicht mehr wie im Normalbetrieb von dem Betriebsbrems-Steuermodul 10 verarbeitet und darüber von den Betriebsbremsen 3 in den Betriebsbremskreisen 2a, 2b umgesetzt. Der elektrische Ausfall kann hierbei beispielsweise im Rahmen einer Selbstdiagnose durch das Betriebsbrems-Steuermodul 10 erkannt und in entsprechender Weise, z.B. über ein Diagnose-Signal SD oder eine entsprechende Botschaft auf dem CAN-Bus 20, gemeldet werden.

Das Anhänger-Steuermodul 28 erzeugt über das Vorsteuermodul 29 in Abhängigkeit des Assistenz-Steuersignals SAss bzw. der vorgegebenen Fahrzeug-Soll-Verzögerung zSoll den Redundanz-Steuerdruck pSR und gibt diesen ggf. luftmengenverstärkt über den Redundanz-Ausgang 16 aus. Der Redundanz-Steuerdruck pSR wird über die Redundanz-Druckleitung 21 an den zweiten Vorderachs-Umschaltventil-Eingang 14a2 des Vorderachs-Umschaltventils 14a geleitet und gleichzeitig als Anhänger-Steuerdruck pT an einen möglicherweise angehängten Anhänger 200. In der zweiten Umschaltventil-Schaltstellung X2 des Vorderachs-Umschaltventils 14a kann der Redundanz-Steuerdruck pSR somit als Vorderachs-Redundanzdruck pRa an den pneumatischen Vorderachs-Redundanzanschluss 12a geleitet und darüber - auch ohne Vorliegen einer Fahreranforderung - die automatisiert vorgegebene Assistenz-Bremsvorgabe VA redundant an der Vorderachse 6a über die Betriebsbremsen 3 und/oder auch am Anhänger 200 bewirkt werden.

Somit ist in der zweiten Rückfallebene auch die Umsetzung einer automatisiert vorgegebenen Assistenz-Bremsvorgabe VA über zumindest einen Betriebsbremskreis 2a, 2b und/oder den Anhänger 200 möglich. In dieser zweiten Rückfallebene übernimmt das Anhänger-Steuermodul 28 dabei die Umsetzung der automatisiert vorgegebenen Bremsung.

Um auf die beiden beschriebenen Rückfallebenen zurückgreifen zu können, ist eine entsprechende Umschaltung des Vorderachs-Umschaltventils 14a nötig. Gemäß den Fig. 2a und 2b kann das Vorderachs-Umschaltventil 14a dazu als ein Wechselventil 40a (Fig. 2a) oder als ein 3/2-Wegeventil 40b (Fig. 2b) ausgeführt sein. Beide Ventile 40a, 40b weisen jeweils zwei Vorderachs-Umschaltventil-Eingänge 14a1, 14a2 sowie einen Vorderachs-Umschaltventil-Ausgang 14a3 auf, die wie beschrieben druckleitend zu den entsprechenden Komponenten des Vorderachs-Bremskreises 2a des Bremssystems 1 geführt sind. Die Funktionsweise der dargestellten Ventile 40a, 40b unterscheidet sich wie folgt:
Das Wechselventil 40a, auch als "Select-High-Ventil" bezeichnet, leitet den jeweils höheren der an den beiden Vorderachs-Umschaltventil-Eingängen 14a1, 14a2 anliegenden Druck an den Vorderachs-Umschaltventil-Ausgang 14a3 durch. In der Ausführung gemäß Fig. 1a wird also entweder der vom Betriebsbremsventil 13 ausgegebene Vorderachs-Betriebsbrems-Steuerdruck pSa oder der vom Anhänger-Steuerventil 15 ausgegebene Redundanz-Steuerdruck pSR als Vorderachs-Redundanzdruck pRa an den pneumatischen Vorderachs-Redundanzanschluss 12a des Vorderachs-Druckmodulators 9a geleitet, je nachdem, welcher der beiden Drücke pSa, pSR der Höhere ist.

Liegt eine manuell vorgegebene Betriebsbrems-Bremsvorgabe VB vom Fahrer über das Betriebsbremsventil 13 vor und führt diese Betriebsbrems-Bremsvorgabe VB zu einem höheren ausgesteuerten Druckwert für den Vorderachs-Betriebsbrems-Steuerdruck pSa als der vom Parkbrems-Steuermodul 18 ausgesteuerte Parkbrems-Bremsdruck pPH, der aufgrund einer über das Assistenz-Steuersignal SAss automatisiert angeforderten Assistent-Bremsvorgabe VA ausgesteuert und als Redundanz-Steuerdruck pSR an das Wechselventil 40a geleitet wird, wird das Wechselventil 40a automatisch in die erste Umschaltventil-Schaltstellung X1 geschaltet und an der Vorderachse 6a wird über die Betriebsbremsen 3 die manuell vorgegebene Betriebsbrems-Bremsvorgabe VB umgesetzt. Ist der Fahrer jedoch unaufmerksam oder nicht am Platz oder greift nicht manuell in die Bremsung ein und wird eine automatisierte Bremsung über das Assistenz-Steuersignal SAss angefordert, ist demnach der Vorderachs-Betriebsbrems-Steuerdruck pSa immer geringer als der Parkbrems-Bremsdruck pPH bzw. der Redundanz-Steuerdruck pSR, so dass das Wechselventil 40a automatisch in die zweite Umschaltventil-Schaltstellung X2 übergeht und über die Betriebsbremsen 3 an der Vorderachse 3 die automatisiert vorgegebene Assistenz-Bremsvorgabe VA umgesetzt wird.

Gemäß Fig. 2b ist das Vorderachs-Umschaltventil 14a als ein 3/2-Wegeventil 40b ausgeführt, das elektrisch über ein Umschaltsignal SU gesteuert in die jeweilige Umschaltventil-Schaltstellung X1, X2 gebracht werden kann und somit entweder der erste Vorderachs-Umschaltventil-Eingang 14a1 (X1) oder der zweiten Vorderachs-Umschaltventil-Eingang 14a2 (X2) mit dem Vorderachs-Umschaltventil-Ausgang 14a3 verbunden wird. Das Umschaltsignal SU kann beispielsweise von dem Parkbrems-Steuermodul 18 oder aber auch dem Anhänger-Steuerventil 15 erzeugt und ausgegeben werden, um die Umschaltventil-Schaltstellung X1, X2 elektrisch vorzugeben.

Gemäß einer Ausführungsform, die in Fig. 2c dargestellt ist, kann vorgesehen sein, z.B. im Anhänger-Steuerventil 15 - ggf. auch direkt am Betriebsbremsventil 13 - einen Drucksensor 31 anzuordnen, der den dem ersten Anhängersteuerventil-Eingang 17a vorgegebenen Vorderachs-Betriebsbrems-Steuerdruck pSa misst und demnach feststellt, ob eine Betriebsbrems-Bremsvorgabe VB durch den Fahrer vorliegt. Der Drucksensor 31 gibt ein Bremswunsch-Signal S3 beispielsweise an das Anhänger-Steuermodul 28 zur Verarbeitung aus und das Anhänger-Steuermodul 28 gibt daraufhin ein entsprechendes Umschaltsignal SU aus, das das 3/2-Wegeventil 40b kontrolliert in die erste Schaltstellung X1 umschaltet, wenn über das Bremswunsch-Signal S3 eine vorliegende Betriebsbrems-Bremsvorgabe VB gemeldet wird, so dass die durch das Betriebsbremsventil 13 pneumatisch vorgegebene Betriebsbrems-Bremsvorgabe VB vom 3/2-Wegeventil 40b an den Vorderachs-Redundanzanschluss 12a geleitet und vom Vorderachs-Druckmodulator 9a in einen entsprechenden Vorderachs-Betriebsbrems-Bremsdruck pBa umgesetzt wird.

Mit den in den Fig. 2a, 2b, 2c angegebenen Umschaltventilen 40a, 40b kann also in dem Bremssystem 1 gemäß Fig. 1a automatisiert oder aktiv gesteuert vorgegeben werden, welcher Vorderachs-Redundanzdruck pRa am pneumatischen Vorderachs-Redundanzanschluss 12a anliegt und demnach welche redundante Bremswirkung an der Vorderachse 6a über die Betriebsbremsen 3 umgesetzt werden soll, die Betriebsbrems-Bremsvorgabe VB oder die automatisiert vorgegebene Assistenz-Bremsvorgabe VA.

Das Wechselventil 40a hat hierbei den Vorteil, dass der Fahrer in jeder Situation automatisch die über das Anhänger-Steuerventil 15 automatisiert vorgegebene Assistenz-Bremsvorgabe VA übersteuern kann, so dass der Betriebsbrems-Bremsvorgabe VB, d.h. einer vom Fahrer angeforderten Bremsung, immer eine höhere Priorität eingeräumt werden kann gegenüber einer automatisiert angeforderten Bremsung, falls der Fahrer eine stärkere Bremsung anfordert. Diese höhere Priorität kann auch in dem in Fig. 2c dargestellten Ausführungsbeispiel mit einem aktiv gesteuerten 3/2-Wegeventil 40b eingeräumt werden, indem bei Vorliegen einer Fahrerbremsung, die z.B. über den Drucksensor 31 erfasst wird, über das Umschaltsignal SU eine Umschaltung in die erste Umschaltventil-Schaltstellung X1 stattfindet. Allerdings findet eine solche Umschaltung mit dem 3/2 Wegeventil 40b lediglich dann statt, wenn nicht zum jeweiligen Zeitpunkt bereits in der zweiten Umschaltventil-Schaltstellung X2 eine insbesondere stärkere Bremsung umsetzt wird. Um durch die Umschaltung keinen unsicheren Fahrzustand oder eine anderweitig gefährliche Situation zu verursachen, wird die andere Bremsung zunächst kontrolliert beendet und anschließend erst in die erste Umschaltventil-Schaltstellung X1 umgeschaltet.

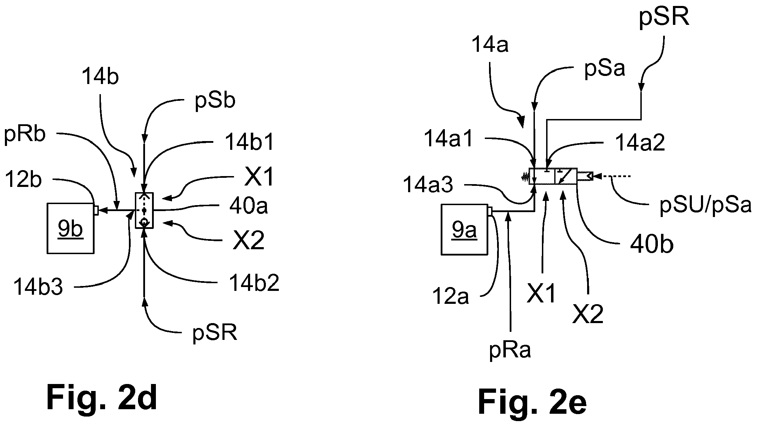

Grundsätzlich ist ein derartiges Umschaltventil 40a, 40b - wie in Fig. 2d stellvertretend für das Wechselventil 40a dargestellt - auch an der Hinterachse 6b bzw. dem pneumatischen Hinterachs-Redundanzanschluss 12b vorgelagert möglich, um auch den Hinterachs-Redundanzdruck pRb fahrerwunschabhängig VB oder gemäß der Assistenz-Bremsvorgabe VA festzulegen, wenn ein elektrischer Ausfall vorliegt. Demnach ist ein Hinterachs-Umschaltventil 14b mit einem ersten Hinterachs-Umschaltventil-Eingang 14b1 und einem zweiten Hinterachs-Umschaltventil-Eingang 14b2 vorgesehen, die je nach Umschaltventil-Schaltstellung X1, X2 den Hinterachs-Betriebsbrems-Steuerdruck pSb oder den Redundanz-Steuerdruck pSR an einen Hinterachs-Umschaltventil-Ausgang 14b3 leiten.

Die konstruktive Ausgestaltung im elektrisch gesteuerten Bremssystem 1 ist in dem Fall vergleichbar zu einer Anordnung an der Vorderachse 6a, so dass die redundante Ansteuerung über das Hinterachs-Umschaltventil 14b in analoger Weise erfolgen kann. Bei Verwendung eines Hinterachs-Umschaltventils 14b ist lediglich dafür zu sorgen, dass in den jeweiligen Rückfallebenen von dem Parkbrems-Steuermodul 18 die Federspeicherbremsen 8 nicht gleichzeitig mit den Betriebsbremsen 3 an der Hinterachse 6b zugespannt werden, um keine überlagerte Bremswirkung an der Hinterachse 6b durch das gleichzeitige Betätigen beider Bremsen 3, 8 an der Hinterachse 6b zu bewirken. Dies kann beispielsweise durch eine entsprechende Steuerung und Regelung in dem Parkbrems-Steuermodul 18 erfolgen.

Somit können bei einem elektronischen Ausfall in den Betriebsbremskreisen 2a, 2b dennoch beide Fahrzeugachsen 6a, 6b gesteuert von dem Anhänger-Steuermodul 28 über die Betriebsbremsen 3 abgebremst werden.

Gemäß Fig. 2e ist beispielhaft als Vorderachs-Umschaltventil 14a ein pneumatisch steuerbares 3/2-Wegeventil 40b dargestellt. Diesem kann pneumatisch ein Umschalt-Steuerdruck pSU zugeführt werden, der hier durch den Vorderachs-Betriebsbrems-Steuerdruck pSa oder einem dazu proportionalen Druck gegeben ist. In Abhängigkeit der Höhe des Umschalt-Steuerdruckes pSU kann die erste Umschaltventil-Schaltstellung X1 eingestellt werden, den Fahrerwunsch als redundanten Bremswunsch an den jeweiligen Betriebsbremskreis 2a, 2b auszugeben.

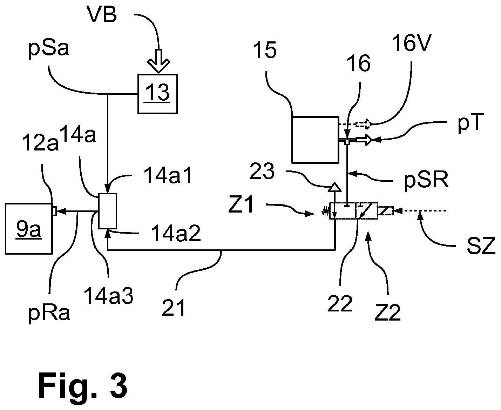

Gemäß Fig. 3 ist eine weitere Ausführungsform des Bremssystems 1 dargestellt, wobei zusätzlich ein Abschaltventil 22 vorgesehen ist, das in der Redundanz-Druckleitung 21 zwischen dem Anhänger-Steuerventil 15 bzw. dem Redundanz-Ausgang 16 und dem Vorderachs-Umschaltventil 14a angeordnet ist. Der Übersichtlichkeit halber ist lediglich der relevante Teil aus dem Bremssystem 1 dargestellt, um die Funktion des zusätzlichen Abschaltventils 22 zu verdeutlichen. Alle weiteren Komponenten des Bremssystems 1 sind identisch mit der in Fig. 1a gezeigten Ausführungsform.

Das Abschaltventil 22 ist als ein elektrisch steuerbares 3/2-Wegeventil ausgeführt, das in Abhängigkeit eines Abschaltsignals SZ zwischen zwei Abschaltventil-Schaltstellungen Z1, Z2 umgeschaltet werden kann. In einer ersten Abschaltventil-Schaltstellung Z1 ist die Redundanz-Druckleitung 21 mit einem Entlüftungsanschluss 23 verbunden, so dass der Redundanz-Steuerdruck pSR vom Anhänger-Steuerventil 15 nicht an das Vorderachs-Umschaltventil 14a übertragen wird. Der zweite Vorderachs-Umschaltventil-Eingang 14a2 ist demnach drucklos. Bei Umschalten des Vorderachs-Umschaltventils 14a in die zweite Umschaltventil-Schaltstellung X2 bleiben die Betriebsbremsen 3 an der Vorderachse 6a somit ebenfalls drucklos und werden somit nicht zugespannt. Ein redundantes Umsetzen einer automatisiert vorgegebenen Assistenz-Bremsvorgabe VA über die Betriebsbremsen 3 der Vorderachse 6a in der zweiten Rückfallebene ist somit bei eingestellter erster Abschaltventil-Schaltstellung Z1 nicht möglich.

In einer zweiten Abschaltventil-Schaltstellung Z2 des Abschaltventils 22 wird die Redundanz-Druckleitung 21 mit dem Redundanz-Ausgang 16 druckleitend verbunden, so dass - wie in dem Bremssystem 1 gemäß Fig. 1a - ein redundanter Betrieb gemäß obiger Beschreibung erfolgen kann, in dem der Redundanz-Steuerdruck pSR gemäß der Assistenz-Bremsvorgabe VA in der zweiten Rückfallebene auch an das Vorderachs-Umschaltventil 14a geleitet wird.

Die jeweilige Abschaltventil-Schaltstellung Z1, Z2 wird hierbei von dem Anhänger-Steuermodul 28 über das Abschaltsignal SZ vorgegeben, so dass vorgegeben werden kann, ob und wann in der zweiten Rückfallebene redundant eingegriffen werden soll. Die Abschaltfunktion kann beispielsweise dann vorteilhaft sein, wenn das Fahrzeug 100 für einen längeren Zeitraum abgestellt wird und demnach ein Abbremsen des Fahrzeuges 100 über die Vorderachse 6a nicht zwingend nötig ist, da das Fahrzeug 100 bereits automatisiert über die Federspeicherbremsen 8 sowie ggf. den Anhänger 200 im Stillstand gehalten wird. Durch ein Umschalten in die erste Abschaltventil-Schaltstellung Z1 in einer derartigen Situation kann beispielsweise verhindert werden, dass bei möglichen Leckagen in den Betriebsbremsen 3 das Druckmittel entweichen kann, wenn diese im Stillstand dauerhaft mit einem Betriebsbrems-Bremsdruck pBa, pBb zugespannt werden.

Ist das Umschaltventil 14a in Fig. 3 als 3/2-Wegeventil 40b ausgeführt, kann die Abschaltfunktion auch bereits durch das Umschaltventil 14a umgesetzt werden, indem im Stillstand bzw. bei dauerhaftem Abstellen die erste Umschaltventil-Schaltstellung X1 eingestellt wird, die in dem Fall der ersten Abschaltventil-Schaltstellung Z1 entspricht. Ohne eine Fahrerbetätigung wird der erste Umschaltventil-Eingang 14a1 demnach über das Betriebsbremsventil 13 quasi entlüftet, was in Fig. 3 dem Verbinden der Redundanz-Druckleitung 21 mit dem Entlüftungsanschluss 23 entspricht. Somit kann in einer derartigen Ausführungsform die Abschaltfunktion ohne ein zusätzliches Ventil lediglich mit dem 3/2-Wegeventil 40b als Umschaltventil 14a erfolgen.

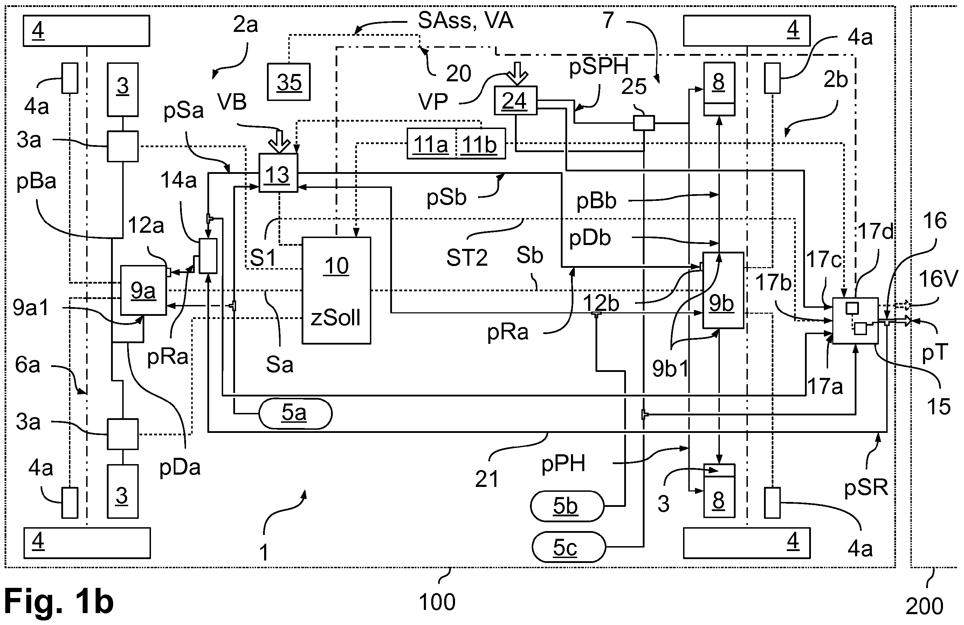

Gemäß Fig. 1b ist eine weitere Ausführungsform des elektrisch steuerbaren Bremssystems 1 dargestellt, wobei sich diese Ausführungsform von dem Bremssystem 1 gemäß Fig. 1a dadurch unterscheidet, dass der Parkbremskreis 7 nicht durch eine elektrisch gesteuerte Parkbremse ausgebildet wird sondern durch eine pneumatisch gesteuerte Parkbremse. Demnach ist in dieser Ausführungsform kein Parkbrems-Steuermodul 18 vorgesehen. Um in diesem Parkbremskreis 7 eine Bremsung bewirken zu können, ist vom Fahrer manuell eine Parkbrems-Bremsvorgabe VP über ein Parkbremsventil 24 vorzugeben, das einen der Parkbrems-Bremsvorgabe VP entsprechenden Parkbrems-Steuerdruck pSPH an ein Relaisventil 25 aussteuert. Das Relaisventil 25 sorgt für eine Luftmengenverstärkung und gibt diesen luftmengenverstärkten Parkbrems-Steuerdruck pSPH als Parkbrems-Bremsdruck pPH an die Federspeicherbremsen 8 aus, um an diesen eine entsprechende Bremsung zu bewirken.

Der vom Parkbremsventil 24 ausgegebene Parkbrems-Steuerdruck pSPH oder ein damit zusammenhängender Druck kann zudem an den dritten Anhängersteuerventil-Eingang 17c des Anhänger-Steuerventils 15 übertragen werden, um die Parkbrems-Vorgabe VP auch an den Anhänger 200 übertragen zu können und darüber eine Feststellbremsfunktion zu gewährleisten.

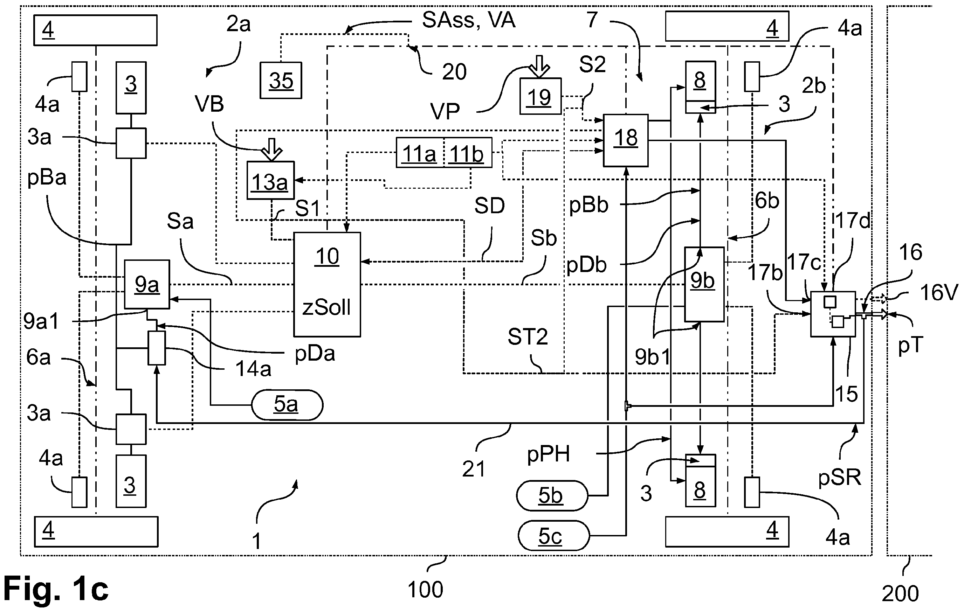

Gemäß Fig. 1c ist eine weitere Ausführungsform des elektronisch steuerbaren Bremssystems 1 dargestellt, wobei im Unterschied zu der Ausführungsform in Fig. 1a die Druckmodulatoren 9a, 9b keinen pneumatischen Redundanzanschluss 12a, 12b aufweisen, d. h. es findet eine rein elektrisch gesteuerte Ausgabe eines Druckmodulator-Ausgangsdruckes pDa, pDb durch die Druckmodulatoren 9a, 9b an die jeweiligen Betriebsbremsen 3 statt. Es kann also keine Rückfallebene dadurch ausgebildet werden, dass dem jeweiligen Druckmodulator 9a, 9b bei einem elektrischen Ausfall ein Redundanzdruck pRa, pRb zugeführt wird. Demnach wird von der in dem Fall rein elektrisch ausgeführten Betriebsbrems-Bremsvorrichtung 13a auch kein Betriebsbrems-Steuerdruck pSa, pSb an die jeweilige Fahrzeugachse 6a, 6b ausgegeben und die Betriebsbrems-Bremsvorgabe VB wird von der elektrischen Betriebsbrems-Bremsvorrichtung 13a rein elektrisch über das Betriebsbrems-Betätigungssignal S1 übertragen. Weiterhin wird auch der erste Anhängersteuerventil-Eingang 17a am Anhänger-Steuerventil 15 nicht mehr mit dem Vorderachs-Betriebsbrems-Steuerdruck pSa bedient.

Um bei einem elektrischen Ausfall dennoch eine Bremsung über die Betriebsbremsen 3 zu ermöglichen, ist vorgesehen, das Vorderachs-Umschaltventil 14a im Druckpfad hinter dem Vorderachs-Druckmodulator-Ausgang 9a1 des Vorderachs-Druckmodulators 9a anzuordnen. Der erste Vorderachs-Umschaltventil-Eingang 14a1 des Vorderachs-Umschaltventils 14a ist demnach mit dem Vorderachs-Druckmodulator-Ausgang 9a1 verbunden, so dass der vom Vorderachs-Druckmodulator 9a ausgegebene Vorderachs-Druckmodulator-Ausgangsdruck pDa dem ersten Vorderachs-Umschaltventil-Eingang 14a1 zugeführt wird. Am zweiten Vorderachs-Umschaltventil-Eingang 14a2 liegt wie in der Ausführungsform gemäß Fig. 1a der Redundanz-Steuerdruck pSR über die Redundanz-Druckleitung 21 an.

Somit wird das Bremssystem 1 derartig abgeändert, dass im Redundanzfall der von dem Anhänger-Steuerventil 15 ausgegebene Redundanz-Steuerdruck pSR in der zweiten Umschaltventil-Schaltstellung X2 nicht vor dem Vorderachs-Druckmodulator 9a in den Vorderachs-Betriebsbremskreis 2a eingespeist wird sondern dahinter. Der Redundanz-Steuerdruck pSR wird somit in der zweiten Umschaltventil-Schaltstellung X2 direkt als Vorderachs-Betriebsbremsdruck pBa verwendet. Um den Betriebsbremsen 3 der Vorderachse 6a in diesem Fall eine angemessene Luftmenge vorzugeben, kann ergänzend eine zusätzliche Luftmengenverstärkung des Redundanz-Steuerdruckes pSR vorgesehen sein, z.B. über ein zusätzliches Relaisventil (nicht dargestellt) in der Redundanz-Druckleitung 21.

In der ersten Umschaltventil-Schaltstellung X1, die im Normalbetrieb eingestellt wird, wird gemäß Fig. 1c der Vorderachs-Druckmodulator-Ausgangsdruck pDa als Vorderachs-Betriebsbremsdruck pBa verwendet, d.h. es findet eine von dem Betriebsbrems-Steuermodul 10 gesteuerte Bremsung gemäß der Betriebsbrems-Bremsvorgabe VB oder gemäß einer automatisiert an das Betriebsbrems-Steuermodul 10 vorgegebenen Assistenz-Bremsvorgabe VA statt. Somit ist die erste Umschaltventil-Schaltstellung X1 standardmäßig eingestellt und bei einem elektrischen Ausfall in den Betriebsbremskreisen 2a, 2b wird auf die zweite Umschaltventil-Schaltstellung X2 umgestellt.

Die erste Rückfallebene, die in der Ausführungsform gemäß Fig. 1a bei einem elektronischen Ausfall der ersten Energiequelle 11a dadurch bewirkt wird, dass manuell gesteuert vom Fahrer über das Betriebsbremsventil 13 und über das Vorderachs-Umschaltventil 14a in der ersten Umschaltventil-Schaltstellung X1 ein Betriebsbrems-Steuerdruck pSa an den pneumatischen Vorderachs-Redundanzanschluss 12a ausgegeben wird, fällt in diesem Ausführungsbeispiel gemäß Fig. 1c weg, da keine pneumatisch gesteuerte Redundanz in den Druckmodulatoren 9a, 9b vorhanden ist.

Ein redundanter Fahrereingriff an der Vorderachse 6a über die Betriebsbremsen 3 kann in diesem Ausführungsbeispiel allerdings dadurch erfolgen, dass der Fahrer manuell über die elektrische Betriebsbrems-Bremsvorrichtung 13a eine Betriebsbrems-Bremsvorgabe VB vorgibt. Über ein zweites Redundanz-Steuersignal ST2 wird diese Betriebsbrems-Bremsvorgabe VB z.B. über eine Direktverbindung oder über ein vom CAN-Bus 20 abweichendes, weiteres (Bus-)Netzwerk, über den zweiten Anhängersteuerventil-Eingang 17b an das Anhänger-Steuerventil 15 übertragen und darin gesteuert von dem Anhänger-Steuermodul 28 und dem Vorsteuermodul 29 in einen Redundanz-Steuerdruck pSR umgewandelt, der über die Redundanz-Druckleitung 21 an das Vorderachs-Umschaltventil 14a umgeleitet wird sowie als Anhänger-Steuerdruck pT an einen Anhänger 200 übertragen werden kann, wie bereits zu der Ausführung gemäß Fig. 1a beschrieben. Die elektrische Betriebsbrems-Bremsvorrichtung 13a ist dazu ebenfalls von der zweiten Energiequelle 11b redundant mit Energie zu versorgen, um eine Ausgabe der Betriebsbrems-Betätigungssignale S1 an das Anhänger-Steuerventil 15 zu gewährleisten, wenn ein elektrischer Ausfall in den Betriebsbremskreisen 2a, 2b und dabei beispielsweise in der ersten Energiequelle 11a vorliegt. Ergänzend kann über das zweite Redundanz-Steuersignal ST2 auch die Parkbrems-Bremsvorgabe VP bzw. das Parkbrems-Betätigungssignal S2 übertragen werden.

In dem Ausführungsbeispiel gemäß Fig. 1c entscheidet z.B. das Anhänger-Steuermodul 28, ob die manuell angeforderte Betriebsbrems-Bremsvorgabe VB oder die Assistenz-Bremsvorgabe VA oder ggf. auch die Parkbrems-Bremsvorgabe VP für eine redundantes Eingreifen in den Betriebsbremskreisen 2a, 2b verwendet werden soll, beispielsweise in Abhängigkeit davon, ob der Fahrer-Bremsvorgabe VB, VP die höhere Priorität eingeräumt werden soll. Die zweite Rückfallebene, in der bei einem elektrischen Ausfall der Betriebsbremskreise 2a, 2b eine automatisiert angeforderte Assistenz-Bremsvorgabe VA über das Anhänger-Steuerventil 15 an die Betriebsbremsen 3 der Vorderachse 6a umgeleitet wird, ist gemäß dieser Ausführungsform im Wesentlichen identisch zu den vorherigen Ausführungsformen in Fig. 1a und 1b. Lediglich die Position der Einspeisung des durch die automatisierte Assistenz-Bremsvorgabe VA vorgegebenen Redundanz-Steuerdruckes pSR hat sich - wie bereits beschrieben - verschoben.

Auch gemäß dieser Ausführungsform kann das Vorderachs-Umschaltventil 14a als Wechselventil 40a oder als 3/2-Wegeventil 40b, wie in den Fig. 2a oder 2b gezeigt, ausgeführt sein, um die Umschaltventil-Schaltstellung X1, X2 automatisch oder aktiv gesteuert umschalten zu können. Da in diesem Ausführungsbeispiel die Entscheidung, ob die Fahrerbremsung VB oder die Assistenz-Bremsvorgabe VP ausgesteuert werden soll im Anhänger-Steuerventil 15 elektronisch stattfindet, ist die Ausführung gemäß Fig. 2c, d.h. mit einem zusätzlichen Drucksensor 31, nicht erforderlich.

Weiterhin kann auch in Fig. 1c ergänzend an der Hinterachse 6b - wie in Fig. 2d angedeutet - ein Hinterachs-Umschaltventil 14b vorgesehen sein, um in analoger Weise wie an der Vorderachse 6a die Betriebsbremsen 3 an der Hinterachse 6b bei einem elektronischen Ausfall über das Anhänger-Steuerventil 15 ansteuern zu können. Auch das Abschaltventil 22 gemäß Fig. 3, das den Redundanz-Steuerdruck pSR in der Redundanz-Druckleitung 21 freigibt, kann in dieser Ausführungsform verwendet werden, um beispielsweise bei einem dauerhaften Abstellen des Fahrzeuges 100 ein Zuspannen der Betriebsbremsen 3 an der Vorderachse 6a zu vermeiden, falls dies gewünscht ist.

In allen beschriebenen Ausführungsformen des Bremssystems 1 wird somit erreicht, dass bei einem elektrischen Ausfall in mindestens einem der Betriebsbremskreise 2a, 2b, d.h. für den Fall, dass die Druckmodulatoren 9a, 9b nicht elektrisch vom Betriebsbrems-Steuermodul 10 gesteuert einen entsprechenden Betriebsbrems-Bremsdrucks pBa, pBb aussteuern können, mindestens eine Rückfallebene ausgebildet wird, in der die Betriebsbremsen 3 an der Vorderachse 6a und/oder an der Hinterachse 6b in Abhängigkeit einer manuell vorgegebenen Betriebsbrems-Bremsvorgabe VB oder einer automatisiert vorgegebenen Assistenz-Bremsvorgabe VA angesteuert werden, wobei die redundante Abbremsung über das Anhänger-Steuerventil 15 gesteuert wird.

Das Anhänger-Steuerventil 15 ist in den bisherigen Ausführungsformen im Wesentlichen wie ein herkömmliches Anhänger-Steuerventil mit den entsprechenden Anhängersteuerventil-Eingängen 17a, 17b, 17c, 17d und dem Redundanz-Ausgang 16, der dem "gelben Kupplungskopf" entspricht, sowie dem Vorratsdruck-Ausgang 16V, der dem "roten Kupplungskopf" entspricht, ausgeführt. Damit kann ergänzend ein im Parkbremsbremskreis 7 ausgesteuerten Parkbrems-Bremsdruck pPH oder Parkbrems-Steuerdruck pSPH oder ein davon abhängiger Druck umgewandelt, vorzugsweise invertiert, und anschließend über den "gelben Kupplungskopf" an den Anhänger 200 ausgegeben werden. Zusätzlich ist somit in den Fig. 1a, 1b, 1c vorgesehen, eine elektrisch redundante Umsetzung über das Anhänger-Steuermodul 28 zu ermöglichen und dabei mit einer integrierten Logik einzugreifen, wenn mindestens einer der Betriebsbremskreise 2a, 2b ausgefallen ist. Die ursprüngliche Funktion eines herkömmlichen Anhänger-Steuerventils 15 wird somit beibehalten, so dass für diese zusätzliche redundante Funktionalität lediglich das Anhänger-Steuermodul 28 nachzurüsten ist, das aber wie beschrieben auch im Normalbetrieb für eine Vorgabe des Anhänger-Steuerdruckes pT sorgen kann.

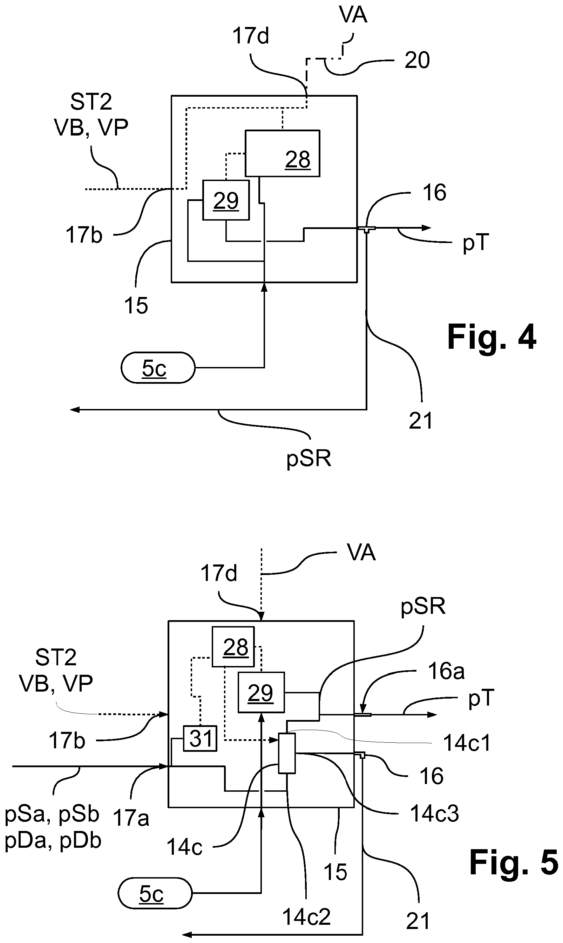

Ein möglicher Aufbau des Anhänger-Steuerventils 15, um diese Funktionalitäten zu erreichen, ist in den Fig. 4 und 5 detailliert dargestellt. In einer Variante des Anhänger-Steuerventils 15, die in Fig. 4 dargestellt ist, ist wie oben beschrieben vorgesehen, den Redundanz-Steuerdruck pSR elektronisch zu erzeugen in Abhängigkeit der über den zweiten Anhängersteuerventil-Eingang 17b oder einen zusätzlichen Anhängersteuerventil-Eingang des Anhänger-Steuerventil 15 übertragenen Parkbrems-Bremsvorgabe VP oder Betriebsbrems-Bremsvorgabe VB bzw. des Parkbrems-Betätigungssignals S2 und/oder des Betriebsbrems-Betätigungssignals S1, das über ein vom CAN-Bus 20 abweichendes (Bus-)Netzwerk oder über eine Direktverbindung ausgehend vom Betriebsbremsventil 13 oder der elektrischen Betriebsbrems-Betätigungsvorrichtung 13a und/oder von der Parkbrems-Betätigungsvorrichtung 19 über das zweite Redundanz-Steuersignal ST2 übertragen wird. Über einen vierten Anhängersteuerventil-Eingang 17d kann weiterhin die Assistenz-Bremsvorgabe VA bzw. das Assistenz-Steuersignal SAss zugeführt werden, das über den CAN-Bus 20 im Fahrzeug 100 übertragen wird. Das Anhänger-Steuermodul 28 erzeugt in Abhängigkeit einer dieser Bremsvorgaben VA, VB, VP über das Vorsteuermodul 29 im Anhänger-Steuerventil 15 den Redundanz-Steuerdruck pSR, der über den Redundanz-Ausgang 16 an das jeweilige Umschaltventil 14a, 14b zur Umsetzung der Bremsung mit den Betriebsbremsen 3 und/oder als Anhänger-Steuerdruck pT an einen Anhänger 200 ausgegeben wird.

Gemäß einer weiteren Ausführungsform des Anhänger-Steuerventils 15, die in der Fig. 5 dargestellt ist, ist in dem Anhänger-Steuerventil 15 ein Redundanz-Umschaltventil 14c integriert, wobei das Redundanz-Umschaltventil 14c dieselbe Aufgabe und Funktionalität übernimmt wie die in den vorherigen Ausführungsbeispielen genannten Umschaltventile 14a, 14b an den jeweiligen Fahrzeugachsen 6a, 6b. Das Redundanz-Umschaltventil 14c kann hierbei wie auch in den vorherigen Ausführungsformen als Wechselventil 40a (s. Fig, 2a) oder als elektrisch steuerbares 3/2-Wegeventil 40b (s. Fig. 2b und 2c) ausgeführt sein. In Fig. 5 ist der Übersichtlichkeit halber lediglich die gegenüber den vorherigen Ausführungsformen abweichenden Komponenten im Anhänger-Steuerventil 15 dargestellt.

Gemäß Fig. 5 ist demnach vorgesehen, dem Redundanz-Umschaltventil 14c über einen ersten Redundanz-Umschaltventil-Eingang 14c1 den vom Betriebsbremsventil 13 aufgrund der Betriebsbrems-Bremsvorgabe VB ausgesteuerten Betriebsbrems-Steuerdruck pSa, pSb, vorzugsweise den Vorderachs-Betriebsbrems-Steuerdruck pSa, vorzugeben, der wie in dem Bremssystem 1 gemäß Fig. 1a über den ersten Anhängersteuerventil-Eingang 17a an das Anhänger-Steuerventil 15 übertragen werden kann, um den Anhänger 200 in Abhängigkeit vom Vorderachs-Betriebsbrems-Steuerdruck pSa abzubremsen. Alternativ kann für das Bremssystem 1 gemäß Fig. 1c in dem kein Betriebsbrems-Steuerdruck pSa, pSb von der in dem Fall rein elektrischen Betriebsbrems-Betätigungsvorrichtung 13a vorgegeben wird, vorgesehen sein, den aufgrund des jeweiligen Betriebsbrems-Steuersignals Sa, Sb von dem jeweiligen Druckmodulator 9a, 9b erzeugten Druckmodulator-Ausgangsdruck pDa, pDb an den ersten Anhängersteuerventil-Eingang 17a des Anhänger-Steuerventils 15 zu leiten und diesen an den ersten Redundanz-Umschaltventil-Eingang 14c1 vorzugeben.

An einen zweiten Redundanz-Umschaltventil-Eingang 14c2 des Redundanz-Umschaltventils 14c wird der von dem Vorsteuermodul 29 im Anhänger-Steuerventil 15 in Abhängigkeit der jeweiligen elektronisch vorgegebenen Bremsvorgabe VA, VB, VP aus dem Parkbrems-Druckmittelvorrat 5c erzeugte Redundanz-Steuerdruck pSR vorgegeben. Der erzeugte Redundanz-Steuerdruck pSR wird anschließend an den zweiten Redundanz-Umschaltventil-Eingang 14c2 sowie auch an einen Anhänger-Ausgang 16a - d.h. den "gelben Kupplungskopf" - übertragen, um diesen als Anhänger-Steuerdruck pT an ein Bremssystem mit Betriebsbremsen im angehängten Anhänger 200 vorgeben zu können. Der Redundanz-Ausgang 16 und der Anhänger-Ausgang 16a fallen somit gemäß dieser Ausführungsform nicht zusammen wie in den vorherigen Ausführungsbeispielen.

An einen Redundanz-Umschaltventil-Ausgang 14c3 des Redundanz-Umschaltventils 14c werden je nach Umschaltventil-Schaltstellung X1, X2 wahlweise die an den Redundanz-Umschaltventil-Eingängen 14c1, 14c2 anliegenden Drücke pSR, pSa, pSb, pDa, pDb nach der oben beschriebenen Systematik, d.h. automatisiert über das Wechselventil 40a oder aktiv gesteuert über das 3/2-Wegeventil 40b, ausgegeben. Der Redundanz-Umschaltventil-Ausgang 14c3 ist mit dem Redundanz-Ausgang 16 des Anhänger-Steuerventils 15 verbunden, der in dieser Ausführungsform dafür vorgesehen ist, den vom Redundanz-Umschaltventil-Ausgang 14c3 wahlweise ausgegebenen Druck pSR, pSa, pSb, pDa, pDb für eine Ansteuerung der Betriebsbremsen 3 über den Druckmodulator 9a, 9b auszugeben. In dieser Ausführung des Anhänger-Steuerventils 15 ist dazu die Redundanz-Druckleitung 21 an den Redundanz-Ausgang 16 angeschlossen, um darüber für eine Einspeisung des wahlweise ausgegebenen Druckes pSR, pSa, pSb, pDa, pDb an der entsprechenden Stelle analog in den mindestens einen Betriebsbremskreis 2a, 2b zu sorgen.

Ist demnach eine Vorgabe des Betriebsbrems-Steuerdruckes pSa, pSb, vorzugsweise des Vorderachs-Betriebsbrems-Steuerdruckes pSa, über den ersten Anhängersteuerventil-Eingang 17a des Anhänger-Steuerventils 15 vorgesehen, ist die Redundanz-Druckleitung 21 direkt mit dem Redundanzanschluss 12a, 12b des jeweiligen Druckmodulators 9a, 9b, vorzugsweise des Vorderachs-Druckmodulators 9a, zu verbinden, um als Redundanzdruck pRa, pRb den am Redundanz-Ausgang 16 des Anhänger-Steuerventils 15 ausgegebenen Druck - d.h. wahlweise den Redundanz-Steuerdruck pSR oder den jeweiligen Betriebsbrems-Steuerdruck pSa, pSb - zu verwenden. Wird hingegen der Druckmodulator-Ausgangsdruck pDa, pDb an den ersten Anhängersteuerventil-Eingang 17a vorgegeben, ist die Redundanz-Druckleitung 21 direkt mit den Betriebsbremsen 3 zu verbinden, um den am Redundanz-Ausgang 16 anliegenden Druck - d.h. wahlweise den Redundanz-Steuerdruck pSR oder den Druckmodulator-Ausgangsdruck pDa, pDb - als Betriebsbrems-Bremsdruck pBa, pBb zur Ansteuerung der Betriebsbremsen 3 zu verwenden.

Je nachdem, ob in Anhängigkeit des Redundanz-Steuerdruckes pSR im redundanten Bremsbetrieb lediglich eine der Fahrzeugachsen 6a, 6b über den entsprechenden Betriebsbremskreis 2a, 2b redundant abgebremst werden soll, kann die Redundanz-Druckleitung 21 auch lediglich für eine Einspeisung des Redundanz-Steuerdruckes pSR in einen der Betriebsbremskreise 2a, 2b sorgen.

### Bezugszeichenliste (Bestandteil der Beschreibung)

- 1: Bremssystem
- 2a: Vorderachs-Betriebsbremskreis
- 2b: Hinterachs-Betriebsbremskreis
- 3: Betriebsbremsen
- 3a: ABS-Steuerventile
- 4: Räder
- 4a: Raddrehzahlsensoren
- 5a: Vorderachs-Druckmittelvorrat
- 5b: Hinterachs-Druckmittelvorrat
- 5c: Parkbrems-Druckmittelvorrat
- 6a: Vorderachse
- 6b: Hinterachse
- 7: Parkbremskreis
- 8: Federspeicherbremsen
- 9a: Vorderachs-Druckmodulator
- 9a1: Vorderachs-Druckmodulator-Ausgang
- 9b: Hinterachs-Druckmodulator
- 9b1: Hinterachs-Druckmodulator-Ausgang
- 10: Betriebsbrems-Steuermodul
- 11 a: erste Energiequelle
- 11b: zweite Energiequelle
- 12a: pneumatischer Vorderachs-Redundanzanschluss
- 12b: pneumatischer Hinterachs-Redundanzanschluss
- 13: Betriebsbremsventil
- 13: elektronische Betriebsbrems-Betätigungsvorrichtung
- 14a: Vorderachs-Umschaltventil
- 14a1: erster Vorderachs-Umschaltventil-Eingang
- 14a2: zweiter Vorderachs-Umschaltventil-Eingang
- 14a3: Vorderachs-Umschaltventil-Ausgang
- 14b: Hinterachs-Umschaltventil
- 14b1: erster Hinterachs-Umschaltventil-Eingang
- 14b2: zweiter Hinterachs-Umschaltventil-Eingang
- 14b3: Hinterachs-Umschaltventil-Ausgang
- 15: Anhänger-Steuerventil
- 16: Redundanz-Ausgang
- 16a: Anhänger-Ausgang
- 16V: Vorratsdruck-Ausgang
- 17a: erster Anhängersteuerventil-Eingang
- 17b: zweiter Anhängersteuerventil-Eingang
- 17c: dritter Anhängersteuerventil-Eingang
- 17d: vierter Anhängersteuerventil-Eingang
- 18: Parkbrems-Steuermodul
- 19: Parkbrems-Betätigungsvorrichtung
- 20: CAN-Bus
- 21: Redundanz-Druckleitung
- 22: Abschaltventil
- 23: Entlüftungsanschluss
- 24: Parkbremsventil
- 25: Relaisventil
- 28: Anhänger-Steuermodul
- 29: Vorsteuermodul
- 31: Drucksensor
- 35: Assistenz-Steuermodul
- 40a: Wechselventil
- 40b: 3/2-Wegeventil
- 100: Fahrzeug
- 200: Anhänger
- pBa: Vorderachs-Bremsdruck
- pBb: Hinterachs-Bremsdruck
- pDa: Vorderachs-Druckmodulator-Ausgangsdruck
- pDb: Hinterachs-Druckmodulator-Ausgangsdruck
- pSR: Redundanz-Steuerdruck
- pPH: Parkbrems-Bremsdruck
- pRa: Vorderachs-Redundanzdruck
- pRb: Hinterachs-Redundanzdruck
- pSa: Vorderachs-Betriebsbrems-Steuerdruck
- pSb: Hinterachs-Betriebsbrems-Steuerdruck
- pSPH: Parkbrems-Steuerdruck
- pSU: Umschalt-Steuerdruck
- pT: Anhänger-Steuerdruck
- S1: Betriebsbrems-Betätigungssignal
- S2: Parkbrems-Betätigungssignal
- S3: Bremswunsch-Signal
- SAss: Assistenz-Steuersignal
- Sa: Vorderachs-Betriebsbrems-Steuersignal
- Sb: Hinterachs-Betriebsbrems-Steuersignal
- SD: Diagnose-Signal
- ST1: erstes Redundanz-Steuersignal
- ST2: zweites Redundanz-Steuersignal
- SU: Umschaltsignal
- SZ: Abschaltsignal
- VA: Assistenz-Bremsvorgabe
- VB: Betriebsbrems-Bremsvorgabe
- VP: Parkbrems-Bremsvorgabe
- X1: erste Umschaltventil-Schaltstellung
- X2: zweite Umschaltventil-Schaltstellung
- Z1: erste Abschaltventil-Schaltstellung
- Z2: zweite Abschaltventil-Schaltstellung
- zSoll: Fahrzeug-Soll-Verzögerung

## Patentansprüche

1. Elektronisch steuerbares Bremssystem (1), insbesondere elektronisch steuerbares pneumatisches Bremssystem (1), für ein Fahrzeug (100), insbesondere Nutzfahrzeug (100), mindestens aufweisend:
- mindestens einen Betriebsbremskreis (2a, 2b) mit Betriebsbremsen (3) und einem Betriebsbrems-Steuermodul (10), wobei den Betriebsbremsen (3) ein Betriebsbrems-Bremsdruck (pBa, pBb) zuführbar ist und das Betriebsbrems-Steuermodul (10) ausgebildet ist, in Abhängigkeit einer Bremsvorgabe (VA, VB, VP) ein Betriebsbrems-Steuersignal (Sa, Sb) zu erzeugen, wobei der Betriebsbrems-Bremsdruck (pBa, pBb) in Abhängigkeit des Betriebsbrems-Steuersignals (Sa, Sb) erzeugt und an die Betriebsbremsen (3) vorgegeben werden kann zum elektrisch gesteuerten Umsetzen der Bremsvorgabe (VA, VB, VP) über den mindestens einen Betriebsbremskreis (2a, 2b), und
- einem Anhänger-Steuerventil (15) mit einem Anhänger-Steuermodul (28), wobei das Anhänger-Steuermodul (28) ausgebildet ist, eine elektronisch übermittelte Bremsvorgabe (VA, VB, VP) aufzunehmen und zu verarbeiten, und das Anhänger-Steuerventil (15) ausgebildet ist, gesteuert von dem Anhänger-Steuermodul (28) einen Redundanz-Steuerdruck (pSR) in Abhängigkeit der elektronisch übermittelten Bremsvorgabe (VA, VB, VP) zu erzeugen und auszugeben,
wobei, falls ein durch das Betriebsbrems-Steuermodul (10) elektrisch gesteuertes Umsetzen der Bremsvorgabe (VA, VB, VP) über den mindestens einen Betriebsbremskreis (2a, 2b) verhindert ist,
-- der Betriebsbrems-Bremsdruck (pBa, pBb) in Abhängigkeit des in dem Anhänger-Steuerventil (15) erzeugten Redundanz-Steuerdruckes (pSR) erzeugt und an die Betriebsbremsen (3) des mindestens einen Betriebsbremskreises (2a, 2b) ausgesteuert werden kann zum redundanten Umsetzen der Bremsvorgabe (VA, VB, VP) im Fahrzeug (100), und/oder
-- ein Anhänger-Steuerdruck (pT) in Abhängigkeit des in dem Anhänger-Steuerventil (15) erzeugten Redundanz-Steuerdruckes (pSR) erzeugt und an einen Anhänger (200) ausgegeben werden kann zum redundanten Umsetzen der Bremsvorgabe (VA, VB, VP) in dem Anhänger (200), wobei in dem mindestens einen Betriebsbremskreis (2a, 2b) ein Druckmodulator (9a, 9b) angeordnet ist, wobei der Druckmodulator (9a, 9b) einen Druckmodulator-Ausgang (9a1, 9b1) aufweist und der Druckmodulator (9a, 9b) ausgebildet ist, in Abhängigkeit des Betriebsbrems-Steuersignals (Sa, Sb) ein Druckmodulator-Ausgangsdruck (pDa, pDb) zu erzeugen und über den Druckmodulator-Ausgang (9a1, 9b1) auszugeben, wobei der Druckmodulator-Ausgangsdruck (pDa, pDb) als Betriebsbrems-Bremsdruck (pBa, pBb) an die Betriebsbremsen (3) des mindestens einen Betriebsbremskreises (2a, 2b) übertragbar ist, wobei der Druckmodulator (9a, 9b) einen pneumatischen Redundanzanschluss (12a, 12b) aufweist und dem pneumatischen Redundanzanschluss (12a, 12b) wahlweise der Redundanz-Steuerdruck (pSR) oder ein von einem elektropneumatischen Betriebsbremsventil (13) aufgrund einer Betriebsbrems-Bremsvorgabe (VB) ausgesteuerter Betriebsbrems-Steuerdruck (pSa, pSb) als Redundanzdruck (pRa, pRb) vorgegeben werden kann, wobei dem jeweiligen Redundanzanschluss (12a, 12b) dazu ein Umschaltventil (14a, 14b, 14c) vorgeschaltet ist, wobei das Umschaltventil (14a, 14b, 14c) in zwei Umschaltventil-Schaltstellungen (X1, X2) gebracht werden kann und das Umschaltventil (14a, 14b, 14c)
- in einer ersten Umschaltventil-Schaltstellung (X1) den von dem Betriebsbremsventil (13) aufgrund der Betriebsbrems-Bremsvorgabe (VB) ausgesteuerten Betriebsbrems-Steuerdruck (pSa, pSb) und
- in einer zweiten Umschaltventil-Schaltstellung (X2) den im Anhänger-Steuerventil (15) erzeugten Redundanz-Steuerdruck (pSR) als Redundanzdruck (pRa, pRb) an den Redundanzanschluss (12a, 12b) ausgeben kann zum redundanten Ansteuern des Druckmodulators (9a, 9b).

2. Elektronisch steuerbares Bremssystem (1), insbesondere elektronisch steuerbares pneumatisches Bremssystem (1), für ein Fahrzeug (100), insbesondere Nutzfahrzeug (100), mindestens aufweisend:
- mindestens einen Betriebsbremskreis (2a, 2b) mit Betriebsbremsen (3) und einem Betriebsbrems-Steuermodul (10), wobei den Betriebsbremsen (3) ein Betriebsbrems-Bremsdruck (pBa, pBb) zuführbar ist und das Betriebsbrems-Steuermodul (10) ausgebildet ist, in Abhängigkeit einer Bremsvorgabe (VA, VB, VP) ein Betriebsbrems-Steuersignal (Sa, Sb) zu erzeugen, wobei der Betriebsbrems-Bremsdruck (pBa, pBb) in Abhängigkeit des Betriebsbrems-Steuersignals (Sa, Sb) erzeugt und an die Betriebsbremsen (3) vorgegeben werden kann zum elektrisch gesteuerten Umsetzen der Bremsvorgabe (VA, VB, VP) über den mindestens einen Betriebsbremskreis (2a, 2b), und
- einem Anhänger-Steuerventil (15) mit einem Anhänger-Steuermodul (28), wobei das Anhänger-Steuermodul (28) ausgebildet ist, eine elektronisch übermittelte Bremsvorgabe (VA, VB, VP) aufzunehmen und zu verarbeiten, und das Anhänger-Steuerventil (15) ausgebildet ist, gesteuert von dem Anhänger-Steuermodul (28) einen Redundanz-Steuerdruck (pSR) in Abhängigkeit der elektronisch übermittelten Bremsvorgabe (VA, VB, VP) zu erzeugen und auszugeben,
wobei, falls ein durch das Betriebsbrems-Steuermodul (10) elektrisch gesteuertes Umsetzen der Bremsvorgabe (VA, VB, VP) über den mindestens einen Betriebsbremskreis (2a, 2b) verhindert ist,
-- der Betriebsbrems-Bremsdruck (pBa, pBb) in Abhängigkeit des in dem Anhänger-Steuerventil (15) erzeugten Redundanz-Steuerdruckes (pSR) erzeugt und an die Betriebsbremsen (3) des mindestens einen Betriebsbremskreises (2a, 2b) ausgesteuert werden kann zum redundanten Umsetzen der Bremsvorgabe (VA, VB, VP) im Fahrzeug (100), und/oder
-- ein Anhänger-Steuerdruck (pT) in Abhängigkeit des in dem Anhänger-Steuerventil (15) erzeugten Redundanz-Steuerdruckes (pSR) erzeugt und an einen Anhänger (200) ausgegeben werden kann zum redundanten Umsetzen der Bremsvorgabe (VA, VB, VP) in dem Anhänger (200), wobei in dem mindestens einen Betriebsbremskreis (2a, 2b) ein Druckmodulator (9a, 9b) angeordnet ist, wobei der Druckmodulator (9a, 9b) einen Druckmodulator-Ausgang (9a1, 9b1) aufweist und der Druckmodulator (9a, 9b) ausgebildet ist, in Abhängigkeit des Betriebsbrems-Steuersignals (Sa, Sb) ein Druckmodulator-Ausgangsdruck (pDa, pDb) zu erzeugen und über den Druckmodulator-Ausgang (9a1, 9b1) auszugeben, wobei der Druckmodulator-Ausgangsdruck (pDa, pDb) als Betriebsbrems-Bremsdruck (pBa, pBb) an die Betriebsbremsen (3) des mindestens einen Betriebsbremskreises (2a, 2b) übertragbar ist, wobei den Betriebsbremsen (3) in dem mindestens einen Betriebsbremskreis (2a, 2b) als Betriebsbrems-Bremsdruck (pBa, pBb) wahlweise der Druckmodulator-Ausgangsdruck (pDa, pDb) oder der Redundanz-Steuerdruck (pSR) vorgebbar ist, wobei den Betriebsbremsen (3) dazu ein Umschaltventil (14a, 14b, 14c) vorgeschaltet ist, wobei das Umschaltventil (14a, 14b, 14c) in zwei Umschaltventil-Schaltstellungen (X1, X2) gebracht werden kann und das Umschaltventil (14a, 14b, 14c)
- in einer ersten Umschaltventil-Schaltstellung (X1) den Druckmodulator-Ausgangsdruck (pDa, pDb) und
- in einer zweiten Umschaltventil-Schaltstellung (X2) den im Anhänger-Steuerventil (15) erzeugten Redundanz-Steuerdruck (pSR) als Betriebsbrems-Bremsdruck (pBa, pBb) an die Betriebsbremsen (3) aussteuern kann zum redundanten Ansteuern der Betriebsbremsen (3).

3. Elektronisch steuerbares Bremssystem (1) nach Anspruch 1, **dadurch gekennzeichnet, dass** der Anhänger-Steuerdruck (pT) in Abhängigkeit des in dem Anhänger-Steuerventil (15) erzeugten Redundanz-Steuerdruckes (pSR) erzeugt und an den Anhänger (200) ausgegeben werden kann, falls ein durch das Betriebsbrems-Steuermodul (10) elektrisch gesteuertes Umsetzen der Bremsvorgabe (VA, VB, VP) über den mindestens einen Betriebsbremskreis (2a, 2b) möglich ist, wobei die Bremsvorgabe (VA, VB, VP) dazu von dem Betriebsbrems-Steuermodul (10) auf das Anhänger-Steuerventil (15) übertragbar ist.

4. Elektronisch steuerbares Bremssystem (1) nach Anspruch 1 oder 2,
**dadurch gekennzeichnet, dass** der Betriebsbrems-Bremsdruck (pBa, pBb) in dem mindestens einen Betriebsbremskreis (2a, 2b) lediglich dann in Abhängigkeit des in dem Anhänger-Steuerventil (15) über das Anhänger-Steuermodul (28) erzeugten Redundanz-Steuerdruckes (pSR) an die Betriebsbremsen (3) des mindestens einen Betriebsbremskreises (2a, 2b) ausgesteuert werden kann, falls ein durch das Betriebsbrems-Steuermodul (10) elektrisch gesteuertes Umsetzen der Bremsvorgabe (VA, VB, VP) über den mindestens einen Betriebsbremskreis (2a, 2b) nicht möglich ist.

5. Elektronisch steuerbares Bremssystem (1) nach einem der vorhergehenden Ansprüche, **dadurch gekennzeichnet, dass** die Bremsvorgabe an das Betriebsbrems-Steuermodul (10) und/oder das Anhänger-Steuermodul (28) eine von einem Assistenz-Steuermodul (35) automatisiert vorgegebene Assistenz-Bremsvorgabe (VA) und/oder eine über eine Parkbrems-Betätigungsvorrichtung (19) oder über ein Parkbremsventil (24) in einem Parkbremskreis (7) manuell vorgegebene Parkbrems-Bremsvorgabe (VP) und/oder eine über ein elektropneumatisches Betriebsbremsventil (13) oder eine elektrische Betriebsbrems-Betätigungsvorrichtung (13a) manuell vorgegebene Betriebsbrems-Bremsvorgabe (VB) ist.

6. Elektronisch steuerbares Bremssystem (1) nach einem der vorhergehenden Ansprüche, **dadurch gekennzeichnet, dass** das Anhänger-Steuermodul (28) in dem Anhänger-Steuerventil (15) integriert ist oder mit dem Anhänger-Steuerventil (15) verbunden ist.

7. Elektronisch steuerbares Bremssystem (1) nach einem der vorhergehenden Ansprüche, **dadurch gekennzeichnet, dass** das Anhänger-Steuermodul (28) mit einem Vorsteuermodul (29) im Anhänger-Steuerventil (15) signalleitend verbunden ist und das Vorsteuermodul (29) ausgebildet ist, den Redundanz-Steuerdruck (pSR) gesteuert vom Anhänger-Steuermodul (28) in Abhängigkeit der elektrisch vorgegebenen Bremsvorgabe (VA, VB, VP) zu erzeugen.

8. Elektronisch steuerbares Bremssystem (1) nach einem der Ansprüche 1 und 3 bis 7, **dadurch gekennzeichnet, dass** das Umschaltventil (14a, 14b) in dem mindestens einen Betriebsbremskreis (2a, 2b) angeordnet ist, vorzugsweise an einer dem mindestens einen Betriebsbremskreis (2a, 2b) zugeordneten Fahrzeugachse (6a, 6b) und das Umschaltventil (14a, 14b)
- in der ersten Umschaltventil-Schaltstellung (X1) das Betriebsbremsventil (13) mit dem Redundanzanschluss (12a, 12b) verbindet zum Vorgeben des Betriebsbrems-Steuerdruckes (pSa, pSb) als Redundanzdruck (pRa, pRb) an den Redundanzanschluss (12a, 12b), und
- in der zweiten Umschaltventil-Schaltstellung (X2) den Redundanz-Ausgang (16) des Anhänger-Steuerventils (15) mit dem Redundanzanschluss (12a, 12b) verbindet zum Vorgeben des Redundanz-Steuerdruckes (pSR) als Redundanzdruck (pRa, pRb) an den Redundanzanschluss (12a, 12b).

9. Elektronisch steuerbares Bremssystem (1) nach einem der Ansprüche 1 und 3 bis 7, **dadurch gekennzeichnet, dass** als Umschaltventil ein Redundanz-Umschaltventil (14c) im oder am Anhänger-Steuerventil (15) angeordnet ist und das Redundanz-Umschaltventil (14c)
- in der ersten Umschaltventil-Schaltstellung (X1) das Betriebsbremsventil (13) mit dem Redundanz-Ausgang (16) des Anhänger-Steuerventils (15) verbindet, und
- in der zweiten Umschaltventil-Schaltstellung (X2) den im Anhänger-Steuerventil (15) erzeugten Redundanz-Steuerdruck (pSR) an den Redundanz-Ausgang (16) ausgibt,
wobei der Redundanz-Ausgang (16) des Anhänger-Steuerventils (15) mit dem Redundanzanschluss (12a, 12b) des Druckmodulators (9a, 9b) verbunden ist.

10. Elektronisch steuerbares Bremssystem (1) nach einem der Ansprüche 1 und 3 bis 9, **dadurch gekennzeichnet, dass** der Druckmodulator (9a, 9b) ausgebildet ist, falls eine Vorgabe des Betriebsbrems-Bremsdruckes (pBa, pBb) in Abhängigkeit des Betriebsbrems-Steuersignals (Sa, Sb) verhindert ist, den Druckmodulator-Ausgangsdruck (pDa, pDb) in Abhängigkeit des dem Redundanzanschluss (12a, 12b) wahlweise zugeführten Betriebsbrems-Steuerdruckes (pSa, pSb) oder Redundanz-Steuerdruckes (pSR) zu erzeugen zum redundanten Vorgeben des Betriebsbrems-Bremsdruckes (pBa, pBb).

11. Elektronisch steuerbares Bremssystem (1) nach einem der Ansprüche 2 bis 7, **dadurch gekennzeichnet, dass** das Umschaltventil (14a, 14b) in dem mindestens einen Betriebsbremskreis (2a, 2b) angeordnet ist, vorzugsweise an einer dem mindestens einen Betriebsbremskreis (2a, 2b) zugeordneten Fahrzeugachse (6a, 6b) und das Umschaltventil (14a, 14b)
- in einer ersten Umschaltventil-Schaltstellung (X1) den Druckmodulator-Ausgang (9a1, 9b1) mit den Betriebsbremsen (3) verbindet zum Vorgeben des Druckmodulator-Ausgangsdruckes (pDa, pDb) als Betriebsbrems-Bremsdruck (pBa, pBb) an die Betriebsbremsen (3), und
- in einer zweiten Umschaltventil-Schaltstellung (X2) den Redundanz-Ausgang (16) des Anhänger-Steuerventils (15) mit den Betriebsbremsen (4) verbindet zum Vorgeben des Redundanz-Steuerdruckes (pSR) als Betriebsbrems-Bremsdruck (pBa, pBb) an die Betriebsbremsen (3).

12. Elektronisch steuerbares Bremssystem (1) nach einem der Ansprüche 2 bis 7, **dadurch gekennzeichnet, dass** als Umschaltventil ein Redundanz-Umschaltventil (14c) im oder am Anhänger-Steuerventil (15) angeordnet ist und das Redundanz-Umschaltventil (14c)
- in der ersten Umschaltventil-Schaltstellung (X1) den Druckmodulator-Ausgang (9a1, 9b1) mit dem Redundanz-Ausgang (16) des Anhänger-Steuerventils (15) verbindet, und
- in der zweiten Umschaltventil-Schaltstellung (X2) den im Anhänger-Steuerventil (15) erzeugten Redundanz-Steuerdruck (pSR) an den Redundanz-Ausgang (16) ausgibt,
wobei der Redundanz-Ausgang (16) des Anhänger-Steuerventils (15) mit den Betriebsbremsen (3) verbunden ist.

13. Elektronisch steuerbares Bremssystem (1) nach einem der vorhergehenden Ansprüche, **dadurch gekennzeichnet, dass** das Umschaltventil (14a, 14b, 14c) als ein Wechselventil (40a) oder ein elektrisch oder pneumatisch steuerbares 3/2-Wegeventil (40b) ausgeführt ist,
wobei das Wechselventil (40a) ausgebildet ist, die erste oder die zweite Umschaltventil-Schaltstellung (X1, X2) wahlweise in Abhängigkeit davon einzustellen, ob der Redundanz-Steuerdruck (pSR) oder der Betriebsbrems-Steuerdruck (pSa, pSb) bzw. der Druckmodulator-Ausgangsdruck (pDa, pDb) höher ist, wobei die erste Umschaltventil-Schaltstellung (X1) eingestellt wird, wenn der Betriebsbrems-Steuerdruck (pSa, pSb) bzw. der Druckmodulator-Ausgangsdruck (pDa, pDb) höher sind, und
das 3/2-Wegeventil (40b) in Abhängigkeit eines elektrisch vorgegebenen Umschaltsignals (SU) oder eines pneumatisch vorgegebenen Umschalt-Steuerdruckes (pSU) in die erste Umschaltventil-Schaltstellung (X1) oder in die zweite Umschaltventil-Schaltstellung (X2) schaltbar ist, wobei das Umschaltsignal (SU) oder der Umschalt-Steuerdruck (pSU) in Abhängigkeit davon erzeugt werden können, ob eine angeforderte Betriebsbrems-Bremsvorgabe (VB) in dem mindestens einen Betriebsbremskreis (2a, 2b) vorliegt.

14. Elektronisch steuerbares Bremssystem (1) nach einem der vorhergehenden Ansprüche, **dadurch gekennzeichnet, dass** im Bremssystem (1) weiterhin ein Abschaltventil (22) vorgesehen ist, wobei das Abschaltventil (22) in einer ersten Abschaltventil-Schaltstellung (Z1) eine Aussteuerung des Betriebsbrems-Bremsdruckes (pBa, pBb) an die Betriebsbremsen (3) in Abhängigkeit des im Anhänger-Steuerventil (15) erzeugten Redundanz-Steuerdrucks (pSR) verhindert und in einer zweiten Abschaltventil-Schaltstellung (Z2) zum redundanten Umsetzen der Bremsvorgabe (VA, VB, VP) über den mindestens einen Betriebsbremskreis (2a, 2b) erlaubt, wobei das Abschaltventil (22) ausgebildet ist, die Betriebsbremsen (3) und/oder eine zwischen dem Redundanz-Ausgang (16) des Anhänger-Steuerventils (15) und dem mindestens einen Betriebsbremskreis (2a, 2b) verlaufenden Redundanz-Druckleitung (21) in der ersten Abschaltventil-Schaltstellung (Z1) zu entlüften.

15. Elektrisch steuerbares Bremssystem (1) nach Anspruch 14, **dadurch gekennzeichnet, dass** das Abschaltventil (22) im Anhänger-Steuerventil (15) integriert ist oder dem Redundanz-Ausgang (16) nachgeschaltet in der Redundanz-Druckleitung (21) angeordnet ist.

16. Elektrisch steuerbares Bremssystem (1) nach Anspruch 14 oder 15,
**dadurch gekennzeichnet, dass** das Umschaltventil (14a, 14b, 14c) das Abschaltventil (22) ausbildet, wobei das Umschaltventil (14a, 14b, 14c) ausgebildet ist, in der ersten Umschaltventil-Schaltstellung (X1) die Betriebsbremsen (3) und/oder die Redundanz-Druckleitung (21) zu entlüften.

17. Elektronisch steuerbares Bremssystem (1) nach einem der vorhergehenden Ansprüche, **dadurch gekennzeichnet, dass** der mindestens eine Betriebsbremskreis (2a, 2b) und/oder das Betriebsbrems-Steuermodul (10) von einer ersten Energiequelle (11a) und der Parkbremskreis (7) und/oder das Anhänger-Steuerventil (15) von einer zweiten Energiequelle (11b) mit Energie versorgt ist, wobei die erste Energiequelle (11a) unabhängig von der zweiten Energiequelle (11b) ist.

18. Elektronisch steuerbares Bremssystem (1) nach einem der vorhergehenden Ansprüche, **dadurch gekennzeichnet, dass** das Bremssystem (1) an einen CAN-Bus (20) des Fahrzeuges (100) angebunden ist und die Bremsvorgabe (VA, VB, VP) über den CAN-Bus (20) an den mindestens einen Betriebsbremskreis (2a, 2b) und/oder das Anhänger-Steuerventil (15) des Bremssystems (1) übertragbar sind.

19. Fahrzeug (100), insbesondere Nutzfahrzeug (100), mit einem elektronisch steuerbaren Bremssystem (1) nach einem der vorhergehenden Ansprüche.

20. Verfahren zum Steuern eines elektronischen Bremssystems (1) nach einem der Ansprüche 1 bis 18, mit mindestens den folgenden Schritten:
- Feststellen, ob die Bremsvorgabe (VA, VB, VP) über den mindestens einen Betriebsbremskreis (2a, 2b) elektrisch gesteuert durch das Betriebsbrems-Steuermodul (10) umgesetzt werden kann;
- Erzeugen des Redundanz-Steuerdruckes (pSR) in dem Anhänger-Steuerventil (15) in Abhängigkeit einer elektrisch vorgegebenen Bremsvorgabe (VA, VB, VP), wobei der Redundanz-Steuerdruck (pSR) gesteuert von dem Anhänger-Steuermodul (28) im Anhänger-Steuerventil (15) erzeugt wird; und
- Erzeugen des Betriebsbrems-Bremsdruckes (pBa, pBb) in dem mindestens einen Betriebsbremskreis (2a, 2b) und des Anhänger-Steuerdruckes (pT) zur Ausgabe an den Anhänger (200) in Abhängigkeit des in dem Anhänger-Steuerventil (15) erzeugten Redundanz-Steuerdruckes (pSR), falls ein durch das Betriebsbrems-Steuermodul (10) elektrisch gesteuertes Umsetzen der Bremsvorgabe (VA, VB, VP) über den mindestens einen Betriebsbremskreis (2a, 2b) verhindert ist.

21. Verfahren nach Anspruch 20, **dadurch gekennzeichnet, dass** zur Vorgabe des Betriebsbrems-Bremsdruckes (pBa, pBb) an die Betriebsbremsen in Abhängigkeit des von dem Anhänger-Steuerventil (15) erzeugten Redundanz-Steuerdruck (pSR) dieser Redundanz-Steuerdruck (pSR)
- den Betriebsbremsen (3) direkt als Betriebsbrems-Bremsdruck (pBa, pBb) zugeführt wird oder
- dem Redundanzanschluss (12a, 12b) des Druckmodulators (9a, 9b) als Redundanzdruck (pRa, pRb) zugeführt wird und im Druckmodulator (9a, 9b) in Abhängigkeit davon der Betriebsbrems-Bremsdruck (pBa, pBb) erzeugt und ausgesteuert wird, falls ein durch das Betriebsbrems-Steuermodul (10) elektrisch gesteuertes Umsetzen der Bremsvorgabe (VA, VB, VP) über den mindestens einen Betriebsbremskreis (2a, 2b) verhindert ist.

22. Verfahren nach Anspruch 20 oder 21, **dadurch gekennzeichnet, dass** falls ein durch das Betriebsbrems-Steuermodul (10) elektrisch gesteuertes Umsetzen der Bremsvorgabe (VA, VB, VP) über den mindestens einen Betriebsbremskreis (2a, 2b) möglich ist,
- der Anhänger-Steuerdruck (pT) weiterhin in Abhängigkeit des in dem Anhänger-Steuerventil (15) erzeugten Redundanz-Steuerdruckes (pSR) erzeugt und an den Anhänger (200) ausgegeben werden kann, und
- der Betriebsbrems-Bremsdruck (pBa, pBb) nicht in Abhängigkeit des in dem Anhänger-Steuerventil (15) erzeugbaren Redundanz-Steuerdruckes (pSR) an die Betriebsbremsen (3) des mindestens einen Betriebsbremskreises (2a, 2b) ausgegeben wird.

## Claims

1. An electronically controllable brake system (1), in particular an electronically controllable pneumatic brake system (1), for a vehicle (100), in particular a commercial vehicle (100), at least comprising:
- at least one service brake circuit (2a, 2b) having service brakes (3) and a service-brake control module (10), wherein a service-brake brake pressure (pBa, pBb) can be fed to the service brakes (3), and the service-brake control module (10) is configured to generate a service-brake control signal (Sa, Sb) on the basis of a braking specification (VA, VB, VP), wherein the service-brake brake pressure (pBa, pBb) can be generated on the basis of the service-brake control signal (Sa, Sb) and specified to the service brakes (3), for the implementation of the braking specification (VA, VB, VP) via the at least one service brake circuit (2a, 2b), under electrical control, and
- a trailer control valve (15) having a trailer control module (28), wherein the trailer control module (28) is configured to receive and process an electronically communicated braking specification (VA, VB, VP), and the trailer control valve (15) is configured to generate and output, under the control of the trailer control module (28), a redundancy control pressure (pSR) on the basis of the electronically communicated braking specification (VA, VB, VP),
wherein if implementation of the braking specification (VA, VB, VP), under electrical control by the service-brake control module (10), via the at least one service brake circuit (2a, 2b) is prevented,
-- the service-brake brake pressure (pBa, pBb) can be generated on the basis of the redundancy control pressure (pSR) generated in the trailer control valve (15), and can be applied to the service brakes (3) of the at least one service brake circuit (2a, 2b), for redundant implementation of the braking specification (VA, VB, VP) in the vehicle (100), and/or
-- a trailer control pressure (pT) can be generated on the basis of the redundancy control pressure (pSR) generated in the trailer control valve (15), and can be output to a trailer (200) for the redundant implementation of the braking specification (VA, VB, VP) in the trailer (200), wherein a pressure modulator (9a, 9b) is arranged in the at least one service brake circuit (2a, 2b), wherein the pressure modulator (9a, 9b) has a pressure modulator output (9a1, 9b1), and the pressure modulator (9a, 9b) is configured to generate a pressure-modulator output pressure (pDa, pDb) on the basis of the service-brake control signal (Sa, Sb) and to output it via the pressure modulator output (9a1, 9b1), wherein the pressure-modulator output pressure (pDa, pDb) can be transmitted as a service-brake brake pressure (pBa, pBb) to the service brakes (3) of the at least one service brake circuit (2a, 2b), wherein the pressure modulator (9a, 9b) has a pneumatic redundancy port (12a, 12b), and for the pneumatic redundancy port (12a, 12b) either the redundancy control pressure (pSR) or a service-brake control pressure (pSa, pSb), applied by an electropneumatic service brake valve (13) based on a service-brake braking specification (VB), can be specified as a redundancy pressure (pRa, pRb), wherein a switching valve (14a, 14b, 14c) is connected upstream of the particular redundancy port (12a, 12b), wherein the switching valve (14a, 14b, 14c) can be placed in two switching-valve switched positions (X1, X2), and the switching valve (14a, 14b, 14c)
- in a first switching-valve switched position (X1), can output the service-brake control pressure (pSa, pSb) which is applied by the service brake valve (13) based on the service-brake braking specification (VB), and
- in a second switching-valve switched position (X2), can output the redundancy control pressure (pSR) which is generated in the trailer control valve (15), as a redundancy pressure (pRa, pRb), to the redundancy port (12a, 12b) in order to redundantly actuate the pressure modulator (9a, 9b).

2. An electronically controllable brake system (1), in particular an electronically controllable pneumatic brake system (1), for a vehicle (100), in particular a commercial vehicle (100), at least comprising:
- at least one service brake circuit (2a, 2b) with service brakes (3) and a service-brake control module (10), wherein a service-brake brake pressure (pBa, pBb) can be fed to the service brakes (3), and the service-brake control module (10) is configured to generate a service-brake control signal (Sa, Sb) on the basis of a braking specification (VA, VB, VP), wherein the service-brake brake pressure (pBa, pBb) can be generated on the basis of the service-brake control signal (Sa, Sb) and specified to the service brakes (3), for the implementation of the braking specification (VA, VB, VP) via the at least one service brake circuit (2a, 2b), under electrical control, and
- a trailer control valve (15) having a trailer control module (28), wherein the trailer control module (28) is configured to receive and process an electronically communicated braking specification (VA, VB, VP), and the trailer control valve (15) is configured to generate and output, under the control of the trailer control module (28), a redundancy control pressure (pSR) on the basis of the electronically communicated braking specification (VA, VB, VP),
wherein if implementation of the braking specification (VA, VB, VP), under electrical control by the service-brake control module (10), via the at least one service brake circuit (2a, 2b) is prevented,
-- the service-brake brake pressure (pBa, pBb) can be generated on the basis of the redundancy control pressure (pSR) generated in the trailer control valve (15), and can be applied to the service brakes (3) of the at least one service brake circuit (2a, 2b), for redundant implementation of the braking specification (VA, VB, VP) in the vehicle (100), and/or
-- a trailer control pressure (pT) can be generated on the basis of the redundancy control pressure (pSR) generated in the trailer control valve (15), and can be output to a trailer (200) for the redundant implementation of the braking specification (VA, VB, VP) in the trailer (200), wherein a pressure modulator (9a, 9b) is arranged in the at least one service brake circuit (2a, 2b), wherein the pressure modulator (9a, 9b) has a pressure modulator output (9a1, 9b1), and the pressure modulator (9a, 9b) is configured to generate a pressure-modulator output pressure (pDa, pDb) on the basis of the service-brake control signal (Sa, Sb) and to output it via the pressure modulator output (9a1, 9b1), wherein the pressure-modulator output pressure (pDa, pDb) can be transmitted as a service-brake brake pressure (pBa, pBb) to the service brakes (3) of the at least one service brake circuit (2a, 2b), wherein either the pressure-modulator output pressure (pDa, pDb) or the redundancy control pressure (pSR) can be specified as a service-brake brake pressure (pBa, pBb) to the service brakes (3) in the at least one service brake circuit (2a, 2b), wherein a switching valve (14a, 14b, 14c) is connected upstream of the service brakes (3), wherein the switching valve (14a, 14b, 14c) can be placed in two switching-valve switched positions (X1, X2), and the switching valve (14a, 14b, 14c),
- in a first switching-valve switched position (X1), can apply the pressure-modulator output pressure (pDa, pDb), and
- in a second switching-valve switched position (X2), can apply the redundancy control pressure (pSR), which is generated in the trailer control valve (15), as a service-brake brake pressure (pBa, pBb) to the service brakes (3), in order to redundantly actuate the service brakes (3).

3. The electronically controllable brake system (1) according to claim 1, **characterized in that** the trailer control pressure (pT) can be generated on the basis of the redundancy control pressure (pSR) generated in the trailer control valve (15) and can be output to the trailer (200) if implementation of the braking specification (VA, VB, VP), under electrical control by the service-brake control module (10), via the at least one service brake circuit (2a, 2b) is possible, wherein the braking specification (VA, VB, VP) can be transmitted from the service-brake control module (10) to the trailer control valve (15).

4. The electronically controllable brake system (1) according to claim 1 or 2, **characterized in that** the service-brake brake pressure (pBa, pBb) in the at least one service brake circuit (2a, 2b) can only be applied to the service brakes (3) of the at least one service brake circuit (2a, 2b) on the basis of the redundancy control pressure (pSR) generated in the trailer control valve (15), via the trailer control module (28) if implementation of the braking specification (VA, VB, VP), which is electrically controlled by the service-brake control module (10), is not possible via the at least one service brake circuit (2a, 2b).

5. The electronically controllable brake system (1) according to any of the preceding claims, **characterized in that** the braking specification is an assistance braking specification (VA) which is specified in an automated fashion by an assistance control module (35) to the service-brake control module (10) and/or the trailer control module (28), and/or a parking-brake braking specification (VP) which is specified manually via a parking-brake activation device (19) or via a parking brake valve (24) in a parking brake circuit (7) and/or is a service-brake braking specification (VB) which is specified manually via an electropneumatic service brake valve (13) or an electric service-brake activation device (13a).

6. The electronically controllable brake system (1) according to any of the preceding claims, **characterized in that** the trailer control module (28) is integrated into the trailer control valve (15) or is connected to the trailer control valve (15).

7. The electronically controllable brake system (1) according to any of the preceding claims, **characterized in that** the trailer control module (28) is connected in a signal-conducting fashion to a pilot control module (29) in the trailer control valve (15), and the pilot control module (29) is configured to generate the redundancy control pressure (pSR), under control by the trailer control module (28), on the basis of the electrically specified braking specification (VA, VB, VP).

8. The electronically controllable brake system (1) according to any of claims 1 and 3 to 7, **characterized in that** the switching valve (14a, 14b) is arranged in the at least one service brake circuit (2a, 2b), preferably on a vehicle axle (6a, 6b) which is associated with the at least one service brake circuit (2a, 2b), and the switching valve (14a, 14b),
- in the first switching-valve switched position (X1), connects the service brake valve (13) to the redundancy port (12a, 12b) in order to specify the service-brake control pressure (pSa, pSb) as a redundancy pressure (pRa, pRb) to the redundancy port (12a, 12b), and
- in the second switching-valve switched position (X2), connects the redundancy output (16) of the trailer control valve (15) to the redundancy port (12a, 12b), in order to specify the redundancy control pressure (pSR) as a redundancy pressure (pRa, pRb) to the redundancy port (12a, 12b).

9. The electronically controllable brake system (1) according to any of claims 1 and 3 to 7, **characterized in that** a redundancy switching valve (14c) is arranged as a switching valve in or on the trailer control valve (15), and the redundancy switching valve (14c)
- in the first switching-valve switched position (X1), connects the service brake valve (13) to the redundancy output (16) of the trailer control valve (15), and
- in the second switching-valve switched position (X2), outputs the redundancy control pressure (pSR), which is generated in the trailer control valve (15), to the redundancy output (16),
wherein the redundancy output (16) of the trailer control valve (15) is connected to the redundancy port (12a, 12b) of the pressure modulator (9a, 9b).

10. The electronically controllable brake system (1) according to any of claims 1 and 3 to 9, **characterized in that,** if a specification of the service-brake brake pressure (pBa, pBb) is prevented on the basis of the service-brake control signal (Sa, Sb), the pressure modulator (9a, 9b) is configured to generate the pressure-modulator output pressure (pDa, pDb) on the basis of the service-brake control pressure (pSa, pSb) or redundancy control pressure (pSR) which is selectively fed to the redundancy port (12a, 12b), in order to redundantly specify the service-brake brake pressure (pBa, pBb).

11. The electronically controllable brake system (1) according to any of claims 2 to 7, **characterized in that** the switching valve (14a, 14b) is arranged in the at least one service brake circuit (2a, 2b), preferably on a vehicle axle (6a, 6b) which is associated with the at least one service brake circuit (2a, 2b), and the switching valve (14a, 14b),
- in a first switching-valve switched position (X1), connects the pressure modulator output (9a1, 9b1) to the service brakes (3) in order to specify the pressure-modulator output pressure (pDa, pDb) as a service-brake brake pressure (pBa, pBb) to the service brakes (3), and
- in a second switching-valve switched position (X2), connects the redundancy output (16) of the trailer control valve (15) to the service brakes (4) in order to specify the redundancy control pressure (pSR) as a service-brake brake pressure (pBa, pBb) to the service brakes (3).

12. The electronically controllable brake system (1) according to any of claims 2 to 7, **characterized in that** a redundancy switching valve (14c) is arranged as a switching valve in or on the trailer control valve (15) and the redundancy switching valve (14c),
- in the first switching-valve switched position (X1), connects the pressure modulator output (9a1, 9b1) to the redundancy output (16) of the trailer control valve (15), and
- in the second switching-valve switched position (X2), outputs the redundancy control pressure (pSR), which is generated in the trailer control valve (15), to the redundancy output (16),
wherein the redundancy output (16) of the trailer control valve (15) is connected to the service brakes (3).

13. The electronically controllable brake system (1) according to any of the preceding claims, **characterized in that** the switching valve (14a, 14b, 14c) is embodied as a shuttle valve (40a) or an electrically or pneumatically controllable 3/2-way valve (40b), wherein the shuttle valve (40a) is configured to selectively adjust the first or the second switching valve-switched position (X1, X2) on the basis of whether the redundancy control pressure (pSR) or the service-brake control pressure (pSa, pSb) or the pressure-modulator output pressure (pDa, pDb) is higher, wherein the first switching-valve switched position (X1) is adjusted if the service-brake control pressure (pSa, pSb) or the pressure-modulator output pressure (pDa, pDb) is higher, and the 3/2-way valve (40b) can be switched into the first switching-valve switched position (X1) or into the second switching-valve switched position (X2) on the basis of an electrically specified switching signal (SU) or a pneumatically specified switching control pressure (pSU), wherein the switching signal (SU) or the switching control pressure (pSU) can be generated on the basis of whether a requested service-brake braking specification (VB) is present in the at least one service brake circuit (2a, 2b).

14. The electronically controllable brake system (1) according to any of the preceding claims, **characterized in that** a shutoff valve (22) is furthermore provided in the brake system (1), wherein in a first shutoff-valve switched position (Z1) the shutoff valve (22) prevents application of the service-brake brake pressure (pBa, pBb) to the service brakes (3) on the basis of the redundancy control pressure (pSR) which is generated in the trailer control valve (15), and in a second shutoff-valve switched position (Z2) the shutoff valve permits said application in order to redundantly implement the braking specification (VA, VB, VP) via the at least one service brake circuit (2a, 2b), wherein in the first shutoff-valve switched position (Z1) the shutoff valve (22) is configured to bleed the service brakes (3) and/or a redundancy pressure line (21) running between the redundancy output (16) of the trailer control valve (15) and the at least one service brake circuit (2a, 2b).

15. The electronically controllable brake system (1) according to claim 14, **characterized in that** the shut-off valve (22) is integrated into the trailer control valve (15) or is arranged in the redundancy pressure line (21), connected downstream in the redundancy output (16).

16. The electronically controllable brake system (1) according to claim 14 or 15, **characterized in that** the switching valve (14a, 14b, 14c) forms the shutoff valve (22), wherein in the first switching-valve switched position (X1) the switching valve (14a, 14b, 14c) is configured to bleed the service brakes (3) and/or the redundancy pressure line (21).

17. The electronically controllable brake system (1) according to any of the preceding claims, **characterized in that** the at least one service brake circuit (2a, 2b) and/or the service-brake control module (10) is supplied with energy by a first energy source (11a) and the parking brake circuit (7) and/or the trailer control valve (15) is supplied with energy by a second energy source (11b), wherein the first energy source (11a) is independent of the second energy source (11b).

18. The electronically controllable brake system (1) according to any of the preceding claims, **characterized in that** the brake system (1) is connected to a CAN bus (20) of the vehicle (100), and the braking specification (VA, VB, VP) can be transmitted via the CAN bus (20) to the at least one service brake circuit (2a, 2b) and/or the trailer control valve (15) of the brake system (1).

19. A vehicle (100), in particular a commercial vehicle (100), having an electronically controllable brake system (1) according to any of the preceding claims.

20. A method for controlling an electronic brake system (1) according to any of claims 1 to 18, having at least the following steps:
- determining whether the braking specification (VA, VB, VP) can be implemented via the at least one service brake circuit (2a, 2b) and under electrical control by the service-brake control module (10);
- generating the redundancy control pressure (pSR) in the trailer control valve (15) on the basis of an electrically specified braking specification (VA, VB, VP), wherein the redundancy control pressure (pSR) is generated in a controlled manner by the trailer control module (28) in the trailer control valve (15); and
- generating the service-brake brake pressure (pBa, pBb) in the at least one service brake circuit (2a, 2b) and the trailer control pressure (pT) for output to the trailer (200) on the basis of the redundancy control pressure (pSR) which is generated in the trailer control valve (15), if implementation of the braking specification (VA, VB, VP) via the at least one service brake circuit (2a, 2b) under electrical control by the service-brake control module (10) is prevented.

21. The method according to claim 20, **characterized in that** in order to specify the service-brake brake pressure (pBa, pBb) to the service brakes on the basis of the redundancy control pressure (pSR) which is generated by the trailer control valve (15), this redundancy control pressure (pSR)
- is fed to the service brakes (3) directly as a service-brake brake pressure (pBa, pBb), or
- is fed to the redundancy port (12a, 12b) of the pressure modulator (9a, 9b) as a redundancy pressure (pRa, pRb), and on the basis thereof the service-brake brake pressure (pBa, pBb) is generated and applied in the pressure modulator (9a, 9b) if implementation of the braking specification (VA, VB, VP) under electrical control by the service-brake control module (10), via the at least one service brake circuit (2a, 2b), is prevented.

22. The method according to claim 20 or 21, **characterized in that** if implementation of the braking specification (VA, VB, VP), under electrical control by the service-brake control module (10), via the at least one service brake circuit (2a, 2b) is possible,
- the trailer control pressure (pT) can continue to be generated and output to the trailer (200) on the basis of the redundancy control pressure (pSR) generated in the trailer control valve (15), and
- the service-brake brake pressure (pBa, pBb) is not output to the service brakes (3) of the at least one service-brake circuit (2a, 2b) on the basis of the redundancy control pressure (pSR) which can be generated in the trailer control valve (15).

## Revendications

1. Système de freinage (1) à commande électronique, en particulier système de freinage pneumatique (1) à commande électronique pour un véhicule (100), en particulier un véhicule utilitaire (100), présentant au moins :
- au moins un circuit de freinage de service (2a, 2b) comportant des freins de service (3) et un module de commande de frein de service (10), dans lequel une pression de freinage de frein de service (pBa, pBb) peut être appliquée aux freins de service (3) et le module de commande de frein de service (10) est conçu pour générer un signal de commande de freinage de service (Sa, Sb) en fonction d'une consigne de freinage (VA, VB, VP), dans lequel la pression de freinage de frein de service (pBa, pBb) peut être générée en fonction du signal de commande de freinage de service (Sa, Sb) et fournie aux freins de service (3) pour l'exécution électriquement commandée de la consigne de freinage (VA, VB, VP) par l'intermédiaire de l'au moins un circuit de freinage de service (2a, 2b), et
- une soupape de commande de remorque (15) comportant un module de commande de remorque (28), dans lequel le module de commande de remorque (28) est conçu pour recevoir et traiter une consigne de freinage (VA, VB, VP) transmise électroniquement, et la soupape de commande de remorque (15) est conçue, commandée par le module de commande de remorque (28), pour générer et délivrer une pression de commande de redondance (pSR) en fonction de la consigne de freinage (VA, VB, VP) transmise électroniquement,
dans lequel, au cas où une exécution électriquement commandée par le module de commande de frein de service (10) de la consigne de freinage (VA, VB, VP) par l'intermédiaire de l'au moins un circuit de freinage de service (2a, 2b) est empêchée,
-- la pression de freinage de frein de service (pBa, pBb) peut être générée en fonction de la pression de commande de redondance (pSR) générée dans la soupape de commande de remorque (15) et délivrée aux freins de service (3) de l'au moins un circuit de freinage de service (2a, 2b) pour l'exécution redondante de la consigne de freinage (VA, VB, VP) dans le véhicule (100), et/ou
-- une pression de commande de remorque (pT) peut être générée en fonction de la pression de commande de redondance (pSR) générée dans la soupape de commande de remorque (15) et délivrée à une remorque (200) pour l'exécution redondante de la consigne de freinage (VA, VB, VP) dans la remorque (200), dans lequel un modulateur de pression (9a, 9b) est disposé dans l'au moins un circuit de freinage de service (2a, 2b), dans lequel le modulateur de pression (9a, 9b) présente une sortie de modulateur de pression (9a1, 9b1) et le modulateur de pression (9a, 9b) est conçu pour générer, en fonction du signal de commande de freinage de service (Sa, Sb), une pression de sortie de modulateur de pression (pDa, pDb) et la délivrer par l'intermédiaire de la sortie de modulateur de pression (9a1, 9b1), dans lequel la pression de sortie de modulateur de pression (pDa, pDb) peut être transmise comme pression de freinage de frein de service (pBa, pBb) aux freins de service (3) de l'au moins un circuit de freinage de service (2a, 2b), dans lequel le modulateur de pression (9a, 9b) présente un raccord de redondance (12a, 12b) pneumatique, et la pression de commande de redondance (pSR) ou une pression de commande de frein de service (pSa, pSb) appliquée par une soupape de frein de service (13) électropneumatique conformément à une consigne de freinage de frein de service (VB) peut être fournie sélectivement au raccord de redondance (12a, 12b) pneumatique comme pression de redondance (pRa, pRb), dans lequel une soupape de commutation (14a, 14b, 14c) est montée à cet effet en amont du raccord de redondance (12a, 12b) respectif, dans lequel la soupape de commutation (14a, 14b, 14c) peut être amenée dans deux positions de commutation de soupape de commutation (X1, X2), et la soupape de commutation (14a, 14b, 14c)
- peut délivrer, dans une première position de commutation de soupape commutation (X1), la pression de commande de frein de service (pSa, pSb) appliquée par la soupape de frein de service (13) conformément à la consigne de freinage de frein de service (VB) et
- peut délivrer, dans une seconde position de commutation de soupape de commutation (X2), la pression de commande de redondance (pSR) générée dans la soupape de commande de remorque (15) comme pression de redondance (pRa, pRb) au raccord de redondance (12a, 12b) pour la commande redondante du modulateur de pression (9a, 9b).

2. Système de freinage (1) à commande électronique, en particulier système de freinage pneumatique (1) à commande électronique pour un véhicule (100), en particulier un véhicule utilitaire (100), présentant au moins :
- au moins un circuit de freinage de service (2a, 2b) comportant des freins de service (3) et un module de commande de frein de service (10), dans lequel une pression de freinage de frein de service (pBa, pBb) peut être appliquée aux freins de service (3) et le module de commande de frein de service (10) est conçu pour générer un signal de commande de freinage de service (Sa, Sb) en fonction d'une consigne de freinage (VA, VB, VP), dans lequel la pression de freinage de frein de service (pBa, pBb) peut être générée en fonction du signal de commande de freinage de service (Sa, Sb) et fournie aux freins de service (3) pour l'exécution électriquement commandée de la consigne de freinage (VA, VB, VP) par l'intermédiaire de l'au moins un circuit de freinage de service (2a, 2b), et
- une soupape de commande de remorque (15) comportant un module de commande de remorque (28), dans lequel le module de commande de remorque (28) est conçu pour recevoir et traiter une consigne de freinage (VA, VB, VP) transmise électroniquement, et la soupape de commande de remorque (15) est conçue, commandée par le module de commande de remorque (28), pour générer et délivrer une pression de commande de redondance (pSR) en fonction de la consigne de freinage (VA, VB, VP) transmise électroniquement,
dans lequel, au cas où une exécution électriquement commandée par le module de commande de frein de service (10) de la consigne de freinage (VA, VB, VP) par l'intermédiaire de l'au moins un circuit de freinage de service (2a, 2b) est empêchée,
-- la pression de freinage de frein de service (pBa, pBb) peut être générée en fonction de la pression de commande de redondance (pSR) générée dans la soupape de commande de remorque (15) et délivrée aux freins de service (3) de l'au moins un circuit de freinage de service (2a, 2b) pour l'exécution redondante de la consigne de freinage (VA, VB, VP) dans le véhicule (100), et/ou
-- une pression de commande de remorque (pT) peut être générée en fonction de la pression de commande de redondance (pSR) générée dans la soupape de commande de remorque (15) et délivrée à une remorque (200) pour l'exécution redondante de la consigne de freinage (VA, VB, VP) dans la remorque (200), dans lequel un modulateur de pression (9a, 9b) est disposé dans l'au moins un circuit de freinage de service (2a, 2b), dans lequel le modulateur de pression (9a, 9b) présente une sortie de modulateur de pression (9a1, 9b1) et le modulateur de pression (9a, 9b) est conçu pour générer, en fonction du signal de commande de freinage de service (Sa, Sb), une pression de sortie de modulateur de pression (pDa, pDb) et la délivrer par l'intermédiaire de la sortie de modulateur de pression (9a1, 9b1), dans lequel la pression de sortie de modulateur de pression (pDa, pDb) peut être transmise comme pression de freinage de frein de service (pBa, pBb) aux freins de service (3) de l'au moins un circuit de freinage de service (2a, 2b), dans lequel la pression de sortie de modulateur de pression (pDa, pDb) ou la pression de commande de redondance (pSR) peut être fournie sélectivement comme pression de freinage de frein de service (pBa, pBb) aux freins de service (3) de l'au moins un circuit de freinage de service (2a, 2b), dans lequel une soupape de commutation (14a, 14b, 14c) est montée à cet effet en amont des freins de service (3), dans lequel la soupape de commutation (14a, 14b, 14c) peut être amenée dans deux positions de commutation de soupape de commutation (X1, X2), et la soupape de commutation (14a, 14b, 14c)
- peut délivrer, dans une première position de commutation de soupape de commutation (X1), la pression de sortie de modulateur de pression (pDa, pDb) et
- peut délivrer, dans une seconde position de commutation de soupape de commutation (X2), la pression de commande de redondance (pSR) générée dans la soupape de commande de remorque (15) comme pression de freinage de frein de service (pBa, pBb) aux freins de service (3) pour la commande redondante des freins de service (3).

3. Système de freinage (1) à commande électronique selon la revendication 1, **caractérisé en ce que** la pression de commande de remorque (pT) peut être générée en fonction de la pression de commande de redondance (pSR) générée dans la soupape de commande de remorque (15) et délivrée à la remorque (200) au cas où une exécution électriquement commandée par le module de commande de frein de service (10) de la consigne de freinage (VA, VB, VP) par l'intermédiaire de l'au moins un circuit de freinage de service (2a, 2b) est possible, dans lequel la consigne de freinage (VA, VB, VP) peut à cet effet être transmise à la soupape de commande de remorque (15) par le module de commande de frein de service (10).

4. Système de freinage (1) à commande électronique selon la revendication 1 ou 2, **caractérisé en ce que** la pression de freinage de frein de service (pBa, pBb) dans l'au moins un circuit de freinage de service (2a, 2b) peut être appliquée aux freins de service (3) de l'au moins un circuit de freinage de service (2a, 2b) uniquement en fonction de la pression de commande de redondance (pSR) générée dans la soupape de commande de remorque (15) par l'intermédiaire du module de commande de remorque (28) au cas où une exécution électriquement commandée par le module de commande de frein de service (10) de la consigne de freinage (VA, VB, VP) par l'intermédiaire de l'au moins un circuit de freinage de service (2a, 2b) n'est pas possible.

5. Système de freinage (1) à commande électronique selon l'une des revendications précédentes, **caractérisé en ce que** la consigne de freinage au module de commande de frein de service (10) et/ou au module de commande de remorque (28) est l'une parmi une consigne de freinage d'assistance (VA) prédéfinie de manière automatisée par un module de commande d'assistance (35) et/ou une consigne de freinage de frein de stationnement (VP) prédéfinie manuellement par l'intermédiaire d'un dispositif d'actionnement de frein de stationnement (19) ou d'une soupape de frein de stationnement (24) d'un circuit de freinage de stationnement (7) et/ou une consigne de freinage de frein de service (VB) prédéfinie manuellement par l'intermédiaire d'une soupape de frein de service (13) électropneumatique ou d'un dispositif d'actionnement de frein de service (13a) électrique.

6. Système de freinage (1) à commande électronique selon l'une des revendications précédentes, **caractérisé en ce que** le module de commande de remorque (28) est intégré dans la soupape de commande de remorque (15) ou connecté à la soupape de commande de remorque (15).

7. Système de freinage (1) à commande électronique selon l'une des revendications précédentes, **caractérisé en ce que** le module de commande de remorque (28) est connecté à un module de précommande (29), de manière à conduire des signaux, dans la soupape de commande de remorque (15) et le module de précommande (29) est conçu, commandé par le module de commande de remorque (28), pour générer la pression de commande de redondance (pSR) en fonction de la consigne de freinage (VA, VB, VP) prédéfinie électriquement.

8. Système de freinage (1) à commande électronique selon l'une des revendications 1 et 3 à 7, **caractérisé en ce que** la soupape de commutation (14a, 14b) est disposée dans l'au moins un circuit de freinage de service (2a, 2b), de préférence au niveau d'un essieu de véhicule (6a, 6b) associé à l'au moins un circuit de freinage de service (2a, 2b) et la soupape de commutation (14a, 14b)
- connecte, dans la première position de commutation de soupape de commutation (X1), la soupape de frein de service (13) au raccord de redondance (12a, 12b) pour fournir la pression de commande de frein de service (pSa, pSb) comme pression de redondance (pRa, pRb) au raccord de redondance (12a, 12b), et
- connecte, dans la seconde position de commutation de soupape de commutation (X2), la sortie de redondance (16) de la soupape de commande de remorque (15) au raccord de redondance (12a, 12b) pour fournir la pression de commande de redondance (pSR) comme pression de redondance (pRa, pRb) au raccord de redondance (12a, 12b).

9. Système de freinage (1) à commande électronique selon l'une des revendications 1 et 3 à 7, **caractérisé en ce qu'**une soupape de commutation de redondance (14c) est disposée, comme soupape de commutation, dans ou sur la soupape de commande de remorque (15) et la soupape de commutation de redondance (14c)
- connecte, dans la première position de commutation de soupape de commutation (X1), la soupape de frein de service (13) à la sortie de redondance (16) de la soupape de commande de remorque (15), et
- délivre, à la sortie de redondance (16), dans la seconde position de commutation de soupape de commutation (X2), la pression de commande de redondance (pSR) générée dans la soupape de commande de remorque (15),
dans lequel la sortie de redondance (16) de la soupape de commande de remorque (15) est connectée au raccord de redondance (12a, 12b) du modulateur de pression (9a, 9b).

10. Système de freinage (1) à commande électronique selon l'une des revendications 1 et 3 à 9, **caractérisé en ce que,** lorsqu'une consigne de la pression de freinage de frein de service (pBa, pBb) est empêchée en fonction du signal de commande de frein de service (Sa, Sb), le modulateur de pression (9a, 9b) est conçu pour générer la pression de sortie de modulateur de pression (pDa, pDb) en fonction de la pression de commande de frein de service (pSa, pSb) ou de la pression de commande de redondance (pSR) fournie sélectivement au raccord de redondance (12a, 12b) pour fournir de manière redondante la pression de freinage de frein de service (pBa, pBb).

11. Système de freinage (1) à commande électronique selon l'une des revendications 2 à 7, **caractérisé en ce que** la soupape de commutation (14a, 14b) est disposée dans l'au moins un circuit de freinage de service (2a, 2b), de préférence au niveau d'un essieu de véhicule (6a, 6b) associé à l'au moins un circuit de freinage de service (2a, 2b) et la soupape de commutation (14a, 14b)
- connecte, dans une première position de commutation de soupape de commutation (X1), la sortie de modulateur de pression (9a1, 9b1) aux freins de service (3) pour fournir, aux freins de service (3), la pression de sortie de modulateur de pression (pDa, pDb) comme pression de freinage de frein de service (pBa, pBb), et
- connecte, dans une seconde position de commutation de soupape de commutation (X2), la sortie de redondance (16) de la soupape de commande de remorque (15) aux freins de service (4) pour fournir, aux freins de service (3), la pression de commande de redondance (pSR) comme pression de freinage de frein de service (pBa, pBb).

12. Système de freinage (1) à commande électronique selon l'une des revendications 2 à 7, **caractérisé en ce qu'**une soupape de commutation de redondance (14c) est disposée, comme soupape de commutation, dans ou sur la soupape de commande de remorque (15) et la soupape de commutation de redondance (14c)
- connecte, dans la première position de commutation de soupape de commutation (X1), la sortie de modulateur de pression (9a1, 9b1) à la sortie de redondance (16) de la soupape de commande de remorque (15), et
- délivre, à la sortie de redondance (16), dans la seconde position de commutation de soupape de commutation (X2), la pression de commande de redondance (pSR) générée dans la soupape de commande de remorque (15),
dans lequel la sortie de redondance (16) de la soupape de commande de remorque (15) est connectée aux freins de service (3).

13. Système de freinage (1) à commande électronique selon l'une des revendications précédentes, **caractérisé en ce que** la soupape de commutation (14a, 14b, 14c) est conçue comme soupape à deux voies (40a) ou une soupape à 3/2 voies (40b) à commande électrique ou pneumatique, dans lequel la soupape à deux voies (40a) est conçue pour ajuster sélectivement la première ou la seconde position de commutation de soupape de commutation (X1, X2) selon que la pression de commande de redondance (pSR) ou la pression de commande de frein de service (pSa, pSb) et/ou la pression de sortie de modulateur de pression (pDa, pDb) est plus élevée, dans lequel la première position de commutation de soupape de commutation (X1) est ajustée lorsque la pression de commande de frein de service (pSa, pSb) et/ou la pression de sortie de modulateur de pression (pDa, pDb) sont plus élevées, et la soupape à 3/2 voies (40b) peut être commutée dans la première position de commutation de soupape de commutation (X1) ou dans la seconde position de commutation de soupape de commutation (X2) en fonction d'un signal de commutation (SU) prédéfini électriquement ou d'une pression de commande de commutation (pSU) prédéfinie pneumatiquement, dans lequel le signal de commutation (SU) ou la pression de commande de commutation (pSU) peuvent être générés selon qu'il existe une consigne de freinage de frein de service (VB) demandée dans l'au moins un circuit de freinage de service (2a, 2b).

14. Système de freinage (1) à commande électronique selon l'une des revendications précédentes, **caractérisé en ce que,** dans le système de freinage (1), il est en outre prévu une soupape d'arrêt (22), dans lequel la soupape d'arrêt (22) empêche, dans une première position de commutation de soupape d'arrêt (Z1), une application de la pression de freinage de frein de service (pBa, pBb) aux freins de service (3) en fonction de la pression de commande de redondance (pSR) générée dans la soupape de commande de remorque (15) et permet, dans une seconde position de commutation de soupape d'arrêt (Z2), l'exécution redondante de la consigne de freinage (VA, VB, VP) par l'intermédiaire de l'au moins un circuit de freinage de service (2a, 2b), dans lequel la soupape d'arrêt (22) est conçue pour purger, dans la première position de commutation de soupape d'arrêt (Z1), les freins de service (3) et/ou une conduite de refoulement de redondance (21) s'étendant entre la sortie de redondance (16) de la soupape de commande de remorque (15) et l'au moins un circuit de freinage de service (2a, 2b).

15. Système de freinage (1) à commande électrique selon la revendication 14, **caractérisé en ce que** la soupape d'arrêt (22) est intégrée dans la soupape de commande de remorque (15) ou montée en aval de la sortie de redondance (16) dans la conduite de refoulement de redondance (21).

16. Système de freinage (1) à commande électrique selon la revendication 14 ou 15, **caractérisé en ce que** la soupape de commutation (14a, 14b, 14c) forme la soupape d'arrêt (22), dans lequel la soupape de commutation (14a, 14b, 14c) est conçue pour purger, dans la première position de soupape de commutation (X1), les freins de service (3) et/ou la conduite de refoulement de redondance (21).

17. Système de freinage (1) à commande électronique selon l'une des revendications précédentes, **caractérisé en ce que** l'au moins un circuit de freinage de service (2a, 2b) et/ou le module de commande de frein de service (10) est alimenté par une première source d'énergie (1 1a) et le circuit de frein de stationnement (7) et/ou la soupape de commande de remorque (15) est alimentée par une seconde source d'énergie (11b), dans lequel la première source d'énergie (11a) est indépendante de la seconde source d'énergie (11b).

18. Système de freinage (1) à commande électronique selon l'une des revendications précédentes, **caractérisé en ce que** le système de freinage (1) est connecté à un bus CAN (20) du véhicule (100) et la consigne de freinage (VA, VB, VP) peut être transmise, par l'intermédiaire du bus CAN (20), à l'au moins un circuit de freinage de service (2a, 2b) et/ou à la soupape de commande de remorque (15) du système de freinage (1).

19. Véhicule (100), en particulier véhicule utilitaire (100), comportant un système de freinage (1) à commande électronique selon l'une des revendications précédentes.

20. Procédé de commande d'un système de freinage (1) à commande électronique selon l'une des revendications 1 à 18, comportant au moins les étapes suivantes :
- détermination établissant si la consigne de freinage (VA, VB, VP) peut être exécutée de manière électriquement commandée par le module de commande de frein de service (10), par l'intermédiaire de l'au moins un circuit de freinage de service (2a, 2b) ;
- génération de la pression de commande de redondance (pSR) dans la soupape de commande de remorque (15) en fonction d'une consigne de freinage (VA, VB, VP) prédéfinie électriquement, dans lequel la pression de commande de redondance (pSR), commandée par le module de commande de remorque (28), est générée dans la soupape de commande de remorque (15) ; et
- génération de la pression de freinage de frein de service (pBa, pBb) dans l'au moins un circuit de freinage de service (2a, 2b) et de la pression de commande de remorque (pT) pour la délivrance à la remorque (200) en fonction de la pression de commande de redondance (pSR) générée dans la soupape de commande de remorque (15), au cas où une exécution électriquement commandée par le module de commande de frein de service (10) de la consigne de freinage (VA, VB, VP) par l'intermédiaire de l'au moins un circuit de freinage de service (2a, 2b) est empêchée.

21. Procédé selon la revendication 20, **caractérisé en ce que,** pour la fourniture de la pression de freinage de frein de service (pBa, pBb) aux freins de service en fonction de la pression de commande de redondance (pSR) générée par la soupape de commande de remorque (15), cette pression de commande de redondance (pSR)
- est directement fournie aux freins de service (3) comme pression de freinage de frein de service (pBa, pBb) ou
- est fournie au raccord de redondance (12a, 12b) du modulateur de pression (9a, 9b) comme pression de redondance (pRa, pRb) et, dans le modulateur de pression (9a, 9b), en fonction de cela, la pression de freinage de frein de service (pBa, pBb) est générée puis appliquée, lorsqu'une exécution de la consigne de freinage (VA, VB, VP), laquelle exécution est électriquement commandée par le module de commande de frein de service (10), est empêchée par l'intermédiaire de l'au moins un circuit de freinage de service (2a, 2b).

22. Procédé selon la revendication 20 ou 21, **caractérisé en ce que,** au cas où une exécution électriquement commandée par le module de commande de frein de service (10) de la consigne de freinage (VA, VB, VP) par l'intermédiaire de l'au moins un circuit de freinage de service (2a, 2b) est possible,
- la pression de commande de remorque (pT) peut en outre être générée en fonction de la pression de commande de redondance (pSR) générée dans la soupape de commande de remorque (15) et délivrée à la remorque (200), et
- la pression de freinage de frein de service (pBa, pBb) n'est pas délivrée aux freins de service (3) de l'au moins un circuit de freinage de service (2a, 2b) en fonction de la pression de commande de redondance (pSR) pouvant être générée dans la soupape de commande de remorque (15).
